# EUROPÄISCHE PATENTANMELDUNG

(11) **EP 4 792 908 A1**
(43) Veröffentlichungstag der Anmeldung: **19.08.2026**
(21) Anmeldenummer: 26158335.5
(22) Anmeldetag: 12.02.2026
(51) Int. Cl.: B01D 19/00, C02F 1/00, C02F 1/02, C02F 1/20

(54) **VORRICHTUNG ZUR ENTGASUNG VON WASSER**

(30) Priorität: 14.02.2025 DE 102025105618
(71) Anmelder: Comuna - metall Vorrichtungs- u. Maschinenbau GmbH, 32130 Enger (DE)
(72) Erfinder: Vogelsang, Friedrich-Wilhelm, 32051 Herford (DE)
(74) Vertreter: Beckord & Niedlich Patentanwälte PartG mbB

(57) **Zusammenfassung**

Es wird eine Entgasungsvorrichtung (1) zur Entgasung von Flüssigkeit (2, 2') beschrieben, die einen Behälter (3), einen Zulauf (4) mit einer Zuführeinrichtung (11) für Zulaufflüssigkeit (2') und einen Ablauf (20) mit einer Entnahmeeinrichtung (21) für entgaste Ablaufflüssigkeit (2") umfasst. Die Zuführeinrichtung (11) und die Entnahmeeinrichtung (21) sind in gegenüberliegenden Endabschnitten (3', 3") des Behälters (3) angeordnet. Die Entgasungsvorrichtung (1) umfasst weiterhin eine Heizeinrichtung (13) für Flüssigkeit (2, 2') im Behälter (3). Die Entgasungsvorrichtung (1) ist dazu ausgebildet, um die Zulaufflüssigkeit (2') über den Zulauf (4) so in den Behälter (3) einzubringen, dass die Flüssigkeit (2, 2') im Behälter (3) eine Temperaturschichtung aufweist, wobei die Zulaufflüssigkeit (2') eine erste Schicht (S1) und die im Behälter (3) befindliche Flüssigkeit (2) eine unterschiedliche, zweite Schicht (S2) bildet. Die Erfindung betrifft weiterhin ein Verfahren zur Entgasung von Flüssigkeit (2, 2') mittels einer Entgasungsvorrichtung (1).

## Beschreibung

Die Erfindung betrifft eine Entgasungsvorrichtung zur Entgasung von Flüssigkeit umfassend einen Behälter, einen Zulauf mit einer Zuführeinrichtung für Zulaufflüssigkeit und einen Ablauf mit einer Entnahmeeinrichtung für entgaste Ablaufflüssigkeit, wobei die Zuführeinrichtung und die Entnahmeeinrichtung in gegenüberliegenden Endabschnitten des Behälters angeordnet sind, und umfassend eine Heizeinrichtung für Flüssigkeit im Behälter. Die Erfindung betrifft weiterhin ein Verfahren zur Entgasung von Flüssigkeit mittels einer Entgasungsvorrichtung.

Vorrichtungen der eingangs genannten Art werden dazu eingesetzt, um gelöste Gase aus Flüssigkeiten zu entfernen. Bei der zu entgasenden Flüssigkeit handelt es sich üblicherweise, wenn auch nicht zwingend, um Wasser, z.B. Leitungswasser. Häufig werden solche Vorrichtungen, die auch als Entgasungsvorrichtung oder kurz Entgaser bezeichnet werden, dazu eingesetzt, um im Wasser gelöste Gase wie Sauerstoff oder Kohlenstoffdioxid aus dem Wasser zu entfernen. Diese und andere gelöste Gase verursachen insbesondere bei Werkstoffen aus Eisen Korrosion.

Entgaser werden typischerweise in Dampf- und Heißwassersystemen eingesetzt, z.B. in Kraftwerken. Solche Heißwasseranlagen können z.B. in Fernheizanlagen (Fernwärme), für die Nahwärme oder für den Wärmetransport in Industrieanlagen eingesetzt sein. Allgemein können Entgaser in Anlagen eingesetzt werden, in denen Wasser als Wärmeträger genutzt wird. Je nach Anwendungsfall kann durch einen Entgaser beispielsweise Speisewasser oder Ergänzungswasser für Heizanlagen bereitgestellt werden oder es kann Umlaufwasser aufbereitet werden.

Es sind Vorrichtungen zur Entgasung von Wasser bekannt, die nach dem Unterdruckprinzip arbeiten. Ein Problem bei einer solchen Vakuumentgasung kann sein, dass entsprechende Entgaser nach einiger Betriebszeit an Effizienz verlieren oder sogar versagen. Der Grund ist, dass kleine Undichtigkeiten im Entgaser dazu führen, dass unerwünscht Luft in das System gesogen wird, so dass statt einer Entgasung der Flüssigkeit zusätzlich Gas in die Flüssigkeit eingebracht wird.

Bei der Entgasung von Frischwasser, z.B. als Ergänzungswasser für ein Heizungsnetz, ist üblicherweise die Vollständigkeit der Entgasung des sauerstoffreichen Frischwassers von Bedeutung. Damit das aufbereitete Frischwasser die gewünschten Anforderungen bezüglich der Qualität erfüllt, ist es wünschenswert, dass die Ausschleusung des entgasten Wassers aus dem Entgaser ohne relevanten Kontakt zum zugeführten Frischwasser erfolgt. Auch diesbezüglich gibt es bei bekannten Vorrichtungen noch Verbesserungspotential.

Es ist eine Aufgabe der vorliegenden Erfindung, eine Entgasungsvorrichtung zur Entgasung von Flüssigkeit und ein Verfahren zur Entgasung von Flüssigkeit mittels einer Entgasungsvorrichtung bereitzustellen, mit dem die zuvor genannten Nachteile reduziert und bevorzugt vermieden werden.

Diese Aufgabe wird durch eine Entgasungsvorrichtung nach Patentanspruch 1 sowie durch ein Verfahren gemäß Patentanspruch 13 gelöst.

Eine erfindungsgemäße Entgasungsvorrichtung ist zur Entgasung von Flüssigkeit, insbesondere Wasser, ausgebildet und umfasst zumindest einen Behälter oder Speicher zur Aufnahme von Flüssigkeit. Der Behälter oder Tank kann bevorzugt ein isolierter Behälter sein, insbesondere ein Boiler. Die Entgasungsvorrichtung umfasst einen Zulauf mit einer Zuführeinrichtung zum Einbringen von Zulaufflüssigkeit in den Behälter. Die Zuführeinrichtung ist bevorzugt an einem Ende des Zulaufs realisiert. Unter Zulaufflüssigkeit wird Flüssigkeit verstanden, die in den Behälter zum Zweck der Entgasung eingebracht wird. Die Entgasungsvorrichtung umfasst weiterhin einen Ablauf mit einer Entnahmeeinrichtung für entgaste Flüssigkeit bzw. entgaste Ablaufflüssigkeit aus dem Behälter. Die Entnahmeeinrichtung ist bevorzugt an einem Ende des Ablaufs realisiert. Unter Ablaufflüssigkeit wird Flüssigkeit verstanden, die im Behälter entgast wurde und anschließend aus dem Behälter ausgeschleust wird. Die Zuführeinrichtung und die Entnahmeeinrichtung sind in einander gegenüberliegenden Endabschnitten bzw. Endbereichen des Behälters angeordnet. Bevorzugt kann der Flüssigkeitszulauf unten im Behälter realisiert sein und der Flüssigkeitsablauf oben im Behälter (jeweils bezogen auf die Lotrichtung). Die Entgasungsvorrichtung umfasst weiterhin eine steuerbare Heizeinrichtung für die Flüssigkeit im Behälter. Die Heizeinrichtung ist steuerbar dazu ausgebildet, um die (gesamte) Flüssigkeit im Behälter auf Siedetemperatur zu erhitzen. Die Heizeinrichtung ist bevorzugt im Tank selbst angeordnet. Die Heizeinrichtung ist bevorzugt eine elektrische Heizeinrichtung, z.B. ein elektrischer Heizstab.

Die Entgasungsvorrichtung ist dazu ausgebildet und/oder ist so steuerbar, um die Zulaufflüssigkeit über den Zulauf so in den Behälter einzubringen, dass die Flüssigkeit im Behälter eine Temperaturschichtung aufweist, wobei die Zulaufflüssigkeit eine erste Schicht und die im Behälter (bereits zuvor) befindliche, bevorzugt entgaste, Flüssigkeit eine unterschiedliche, zweite Schicht bildet. Die Entgasungsvorrichtung kann dazu ausgebildet und/oder so steuerbar sein, um die Zulaufflüssigkeit so in den Behälter einzubringen, dass ein gesamtes Flüssigkeitsvolumen, das zu einem bestimmten Zeitpunkt im Behälter ist, eine thermische Schichtung mit zwei unterschiedlichen Flüssigkeitsschichten aufweist. Insbesondere ist der Zulauf dazu ausgebildet, um Zulaufflüssigkeit derart in einen zumindest teilweise mit Flüssigkeit gefüllten Behälter einzubringen, dass die Zulaufflüssigkeit im Behälter eine Schicht bildet, die sich von einer anderen Schicht aus bereits (zuvor) im Behälter befindlicher Flüssigkeit unterscheidet und/oder eigenständig demgegenüber ausgebildet ist. Entsprechend kann die Entgasungsvorrichtung dazu ausgebildet sein, um Zulaufflüssigkeit so in einen teilweise oder vollständig mit Flüssigkeit gefüllten Behälter einzubringen, dass die Flüssigkeit im Behälter eine Schichtung aufweist und/oder so, dass die (gesamte) Flüssigkeit im Behälter geschichtet ist. Mit anderen Worten kann die Zulaufflüssigkeit in einen teilweise oder vollständig mit Flüssigkeit gefüllten Behälter so eingebracht werden, dass ein Volumen der Zulaufflüssigkeit ein (gleichgroßes) Volumen bereits im Behälter befindlicher, bevorzugt entgaster, Flüssigkeit verdrängt und/oder ersetzt. Entsprechend kann erreicht werden, dass die Zulaufflüssigkeit zwar in den Behälter, aber nicht in die, bevorzugt entgaste, Flüssigkeit einströmt, die bereits im Behälter ist.

Bevorzugt wird die Zulaufflüssigkeit über den Zulauf so in den Behälter eingebracht, dass eine stabile (Flüssigkeits-)Schichtung im Behälter erzeugt wird. Eine stabile Schichtung bedeutet insbesondere, dass zwei unterschiedliche Schichten während eines Zuflusses von Zulaufflüssigkeit und/oder während einer Abgabe von Ablaufflüssigkeit vorhanden sind bzw. aufrechterhalten werden. Bevorzugt kann eine stabile Schichtung so erzeugt werden, dass sich die Flüssigkeit der unterschiedlichen Schichten gar nicht oder zumindest nicht signifikant bzw. in keinem relevanten Umfang mischt. Die beiden Flüssigkeitsschichten können in einer Ebene im Flüssigkeitskörper im Behälter aneinandergrenzen und/oder können durch eine (idealisierte) Grenze voneinander getrennt sein.

Vorteilhafterweise ermöglicht die Entgasungsvorrichtung eine effektive Entgasung von Flüssigkeit, wobei eine relativ unkomplizierte Technik verwendet wird. Mittels der Heizeinrichtung kann die Flüssigkeit im Behälter auf deren Siedetemperatur erhitzt werden, um die Entgasung zu bewirken, z.B. bei Atmosphärendruck im Behälter. Ein besonderer Vorteil der Entgasungsvorrichtung ist, dass die entgaste Flüssigkeit im Behälter aufgrund der Temperaturschichtung vor einer (Wieder-)Anreicherung mit Gas, z.B. Sauerstoff, wirksam geschützt ist. Das ist insbesondere während eines Wechsels der Flüssigkeit im Behälter wichtig, d.h. während der Entnahme von entgaster Flüssigkeit und der gleichzeitigen Zufuhr von gashaltiger Flüssigkeit. Vorteilhafterweise kann die gashaltige Flüssigkeit so in den Behälter eingebracht werden, dass diese aufgrund einer thermisch bedingten Schichtung im Behälter eine eigene Schicht bildet, die separat gegenüber der anderen Schicht mit der (bereits) entgasten, heißen Flüssigkeit ist. Mit anderen Worten ist die Entgasungsvorrichtung dazu ausgebildet, um im Betrieb mittels einer Temperaturschichtung im Behälter eine Mischungsbarriere auszubilden, so dass gashaltige Flüssigkeit und entgaste Flüssigkeit im Behälter voneinander getrennt sind bzw. sich nicht (durch-)mischen. Dadurch kann entgaste Flüssigkeit ohne relevanten Kontakt zur Zulaufflüssigkeit aus dem Behälter ausgeschleust werden. Entsprechend kann im Betrieb eine (Konvektions-)Zirkulation der Flüssigkeit im Behälter vollständig oder weitestgehend vermieden werden. Eine im Betrieb ggf. auftretende geringfügige Mischung der Flüssigkeit in einer Ebene, in der die beiden Schichten aufeinandertreffen, kann dadurch kompensiert werden, dass bei einer Entnahme von entgaster Flüssigkeit ein bestimmtes Volumen der Flüssigkeit der zweiten Schicht im Behälter verbleibt (nicht als Ablaufflüssigkeit entnommen wird). Entsprechend kann die maximal entnehmbare Menge entgaster Flüssigkeit etwas geringer sein, als das Fassungsvolumen des Behälters.

Vorteilhafterweise kann mittels der Entgasungsvorrichtung eine möglichst vollständige Entgasung der Flüssigkeit erreicht werden, z.B. von sauerstoffreichem Frischwasser. Das wird insbesondere dadurch ermöglicht, dass die Ausschleusung der entgasten Flüssigkeit aufgrund der thermischen Schichtung ohne relevanten Kontakt zur Zulaufflüssigkeit realisiert ist. Deshalb ist die Entgasungsvorrichtung besonders geeignet für die Entgasung von Frischwasser, z.B. als Ergänzungswasser für ein Heizungsnetz oder eine Heizanlage. Da die entgaste Flüssigkeit während der Entnahme aus dem Behälter zumindest keinen relevanten Kontakt zur gashaltigen Flüssigkeit hat, kann eine besonders effiziente und möglichst vollständige Entgasung bereitgestellt werden.

Vorteilhafterweise kann die Entgasung ohne Unterdruck im Behälter erfolgen. Dadurch kann vermieden werden, dass aufgrund von kleinen Undichtigkeiten in der Vorrichtung Luft in die Flüssigkeit gesogen wird. Anders als bekannte Vorrichtungen ist die Entgasungsvorrichtung gemäß der Erfindung deshalb besonders zuverlässig und ermöglicht eine effektive Entgasung auch nach langer Betriebszeit der Entgasungsvorrichtung. Vorteilhafterweise kann eine (vollständige) Entgasung der Flüssigkeit ohne chemische Entgasung der Flüssigkeit erreicht werden.

Vorteilhafterweise ist die Entgasungsvorrichtung dazu ausgebildet, um eine effektive Desinfektion von Flüssigkeit im Behälter zu bewirken. Entsprechend ermöglicht die Entgasungsvorrichtung eine kombinierte Entgasung und Desinfektion von Wasser, insbesondere zur Bereitstellung von im Wesentlichen sauerstofffreiem und desinfiziertem Wasser. Mittels der Heizeinrichtung kann die Flüssigkeit im Behälter auf deren Siedetemperatur erhitzt werden, um eine Entgasung und zusätzlich eine Desinfektion (Desinfektionsverfahren) der Flüssigkeit zu bewirken, z.B. bei Atmosphärendruck im Behälter. Entsprechend kann die Entgasungsvorrichtung ausgebildet sein, um entgaste und desinfizierte Ablaufflüssigkeit bereitzustellen. Bevorzugt ist die Entgasungsvorrichtung für eine Trinkwasserdesinfektion ausgebildet, insbesondere zur Durchführung eines Desinfektionsverfahrens für Trinkwasser. Vorteilhafterweise kann mittels der Entgasungsvorrichtung "Trinkwasser" bereitgestellt werden, das die mikrobiologischen Anforderungen der deutschen Trinkwasserverordnung erfüllt. Dadurch kann das erhaltene Wasser in unterschiedlichen Bereichen verwendet werden, z.B. in der Lebensmittelindustrie, insbesondere in der Getränkeproduktion. Besonders vorteilhaft kann das desinfizierte Wasser, z.B. nach der Entnahme aus dem Behälter, ggf. aktiv, abgekühlt werden, bevor weiter verarbeitet bzw. genutzt wird. Vorteilhafterweise kann die Entgasungsvorrichtung gemäß der Erfindung allgemein zur Entgasung und (gleichzeitigen) Desinfektion von Flüssigkeit, insbesondere Wasser, ausgebildet sein. Optional kann die Entgasungsvorrichtung ein Verteilventil für stetige Regelung aufweisen, mit dem die Zulaufflüssigkeit, z.B. das Zulaufwasser, zeitweise vollständig oder teilweise am Wärmetauscher vorbeigeleitet werden kann. Durch dieses Verteilventil, das vorzugsweise Teil des Zulaufs ist, kann die Ablaufflüssigkeit, z.B. das Ablaufwasser, ungekühlt zur Verfügung stehen, z.B. mit 100°C, insbesondere zur thermischen Desinfektion aller Bauteile, die vom Ablaufwasser beaufschlagt werden. Anschließend kann mit diesem Ventil des Zulaufs die gewünschte Temperatur (maximale Auskühlung bis Siedetemperatur) geregelt werden. Vorteilhafterweise kann durch das Verteilventil für stetige Regelung im Zulauf einer Verkeimung des (Platten-)Wärmetauschers wirksamen entgegengewirkt bzw. diese unterbunden werden. Die Entgasungsvorrichtung kann optional ein steuerbares Ventil für Ablaufflüssigkeit, z.B. Ablaufwasser, haben, welches Ventil dicht am Behälter angebracht ist. Dieses Ventil ist vorzugsweise Teil des Ablaufs und/oder kann das erste Element sein, das vom Ablaufwasser nach Verlassen des Behälters durchströmt wird. Vorteilhafterweise können dadurch alle auskühlenden Bauteile nach der Benutzung dicht verschlossen bleiben und keinen Kontakt zum ggf. ausgekühlten Boilerwasser erhalten.

Die Erfindung betrifft weiterhin ein Verfahren zur Entgasung von Flüssigkeit (Entgasungsverfahren), bevorzugt zur (gleichzeitigen) Desinfektion von Flüssigkeit (Desinfektionsverfahren), mittels einer Entgasungsvorrichtung, insbesondere eine Entgasungsvorrichtung gemäß der Erfindung. Die Entgasungsvorrichtung umfasst einen Behälter oder Boiler für Flüssigkeit, einen Zulauf mit einer endseitigen Zuführeinrichtung zum Einbringen von Zulaufflüssigkeit in den Behälter und einen Ablauf mit einer Entnahmeeinrichtung für entgaste Flüssigkeit bzw. entgaste Ablaufflüssigkeit aus dem Behälter. Die Zuführeinrichtung und die Entnahmeeinrichtung sind in einander gegenüberliegenden Endabschnitten des Behälters angeordnet. Die Entgasungsvorrichtung umfasst weiterhin eine steuerbare Heizeinrichtung zum Erhitzen der Flüssigkeit im Behälter.

In dem Verfahren wird die Zulaufflüssigkeit über den Zulauf so in den Behälter eingebracht, dass die (gesamte) Flüssigkeit im Behälter eine Temperaturschichtung aufweist, wobei die Zulaufflüssigkeit eine erste Schicht und die im Behälter befindliche, bevorzugt entgaste, Flüssigkeit eine unterschiedliche, zweite Schicht bildet. Das Verfahren wird bevorzugt mittels einer Steuereinrichtung der Entgasungsvorrichtung durchgeführt. Bevorzugt können die Verfahrensschritte in einem automatisierten Prozess durchgeführt werden, d.h. ohne direkten manuellen Eingriff. Vorteilhafterweise lassen sich durch das Verfahren dieselben Effekte erreichen, die anhand der Entgasungsvorrichtung beschrieben sind.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die Heizeinrichtung ist vorzugsweise in einem Endabschnitt des Behälters angeordnet, insbesondere in einem (ersten) Endabschnitt mit der Zuführeinrichtung. Vorzugsweise ist die Heizeinrichtung in unmittelbarer Nähe zu und/oder benachbart zu einer Wand des Behälters, die in Lotrichtung den Abschluss des Behälters bildet. Entsprechend ist die Heizeinrichtung im Betrieb vorzugsweise möglichst weit unten im Behälter angeordnet. Beispielsweise kann ein Abstand zwischen der Heizeinrichtung und einer unteren (in Lotrichtung weisenden) Behälterwand höchstens 20cm, bevorzugt höchstens 15cm, insbesondere höchstens 10cm, sein. Vorteilhafterweise kann dadurch das gesamte Behälterwasser zuverlässig auf Siedetemperatur beheizt werden. Die Heizeinrichtung kann optional, z.B. aus Platzgründen, unsymmetrisch ausgebildet und/oder im Behälter angebracht sein. Die Heizeinrichtung kann vorzugsweise ein (einziges) Heizelement umfassen zur Beheizung der Flüssigkeit. Prinzipiell kann die Heizeinrichtung auch mehrere (zwei oder mehr), z.B. separate, Elemente umfassen zur Beheizung der Flüssigkeit. Diese Elemente können räumlich voneinander getrennt sein. Die Heizeinrichtung kann daher z.B. einen, zwei oder mehr Heizstäbe umfassen.

Die Entgasungsvorrichtung hat vorzugsweise steuerbare Mittel zur Erzeugung von Unterdruck im Behälter. Vorteilhafterweise ermöglicht die Entgasungsvorrichtung eine Kombination von Unterdruck und Erhitzen der Flüssigkeit zum Zweck der Entgasung. Ein Unterdruck (bezogen auf Atmosphärendruck) kann vorzugsweise zumindest 950mbar, bevorzugt zumindest 900mbar, insbesondere zumindest 800mbar, sein. Entsprechend ermöglicht die Entgasungsvorrichtung eine Siedeentgasung von Wasser bei Unterdruck. Es wird darauf hingewiesen, dass mittels der Entgasungsvorrichtung eine wirksame gleichwertige Entgasung auch bei Atmosphärendruck möglich ist. Vorzugsweise kann nach einer langen Stillstandszeit der Entgasungsvorrichtung, z.B. sofern der Behälter und/oder die Flüssigkeit Raumtemperatur hat, in dem Entgasungsverfahren ein Unterdruck erzeugt werden. Beispielsweise reicht bei einem Unterdruck von 950mbar, bzw. einem Absolutdruck von 50mbar, eine Aufheizung der Flüssigkeit auf ca. 33°C für die Entgasung aus. Vorteilhafterweise kann dadurch eine erste Aufheizphase nach langer Stillstandszeit im Vergleich zur rein thermischen Entgasung deutlich schneller abgeschlossen werden (durch geringe Auskühlung im Behälter). Ein Wärmeaustausch von z.B. 12°C kaltem Frischwasser auf z.B. 23°C erwärmtes Zulaufwasser und die Rückkühlung von 33°C auf 23°C ist mit geringerer Tauscherleistung zu erreichen. Bei nachfolgenden Entgasungsintervallen ist der Unterschied zur rein thermischen Entgasung gering. Entsprechend kann insbesondere dann in dem Entgasungsverfahren auf Unterdruck verzichtet werden.

Die Entgasungsvorrichtung ist grundsätzlich zur Entgasung unterschiedlicher Flüssigkeiten ausgebildet. Bevorzugt handelt es sich bei der Flüssigkeit um Wasser. Das eingesetzte Wasser kann kaltes Leitungswasser sein. Vorzugsweise ist die Entgasungsvorrichtung zur Entgasung bzw. Bereitstellung von Speisewasser und/oder Frischwasser ausgebildet, insbesondere zur Bereitstellung von Ergänzungswasser und/oder Zusatzwasser (nicht Kreislaufwasser) für Heizanlagen. Bevorzugt kann als Zulaufflüssigkeit (sauerstoffreiches) Frischwasser eingesetzt werden (Frischwasserentgasung). Für die Einspeisung in ein Heizungsnetz wird vorzugsweise vollentsalztes Wasser verwendet. Das entgaste Wasser (als Ablaufflüssigkeit) kann vorzugsweise als Ergänzungswasser für Heizanlagen eingesetzt werden. Das entgaste Wasser kann auch als Speisewasser eingesetzt werden, z.B. für Dampferzeuger. Allgemein kann das entgaste Wasser als Wärmeträger eingesetzt werden. Prinzipiell kann die Entgasungsvorrichtung auch zur Entgasung von Umlaufwasser eingesetzt werden (Umlaufwasserentgasung). Die Erfindung wird nachfolgend, ohne eine Beschränkung darauf, anhand einer Frischwasserentgasung beschrieben, wobei das entgaste Wasser als Ergänzungswasser für Heizanlagen verwendet werden kann. Unter Entgasung wird im Rahmen der Erfindung verstanden, dass gelöste Gase aus der eingesetzten Flüssigkeit, insbesondere Wasser, entfernt werden. Die Entgasung wird bevorzugt so durchgeführt, dass zumindest die korrosionfördernden Gase Sauerstoff und Kohlenstoffdioxid möglichst vollständig aus dem Wasser entfernt werden. Ein Restgehalt dieser Gase im entgasten Wasser liegt vorzugsweise bei unter 0,02ppm (Parts per million). Beispielsweise kann die Entgasung so erfolgen, dass die Anforderungen von VDI 2035 hinsichtlich des Gehalts an Sauerstoff erfüllt sind. Entsprechend sollte der Sauerstoffgehalt im entgasten (Heizungs-)Wasser kleiner als 0,1mg/l sein, vorzugsweise kleiner als 0,05mg/l.

Die Entgasungsvorrichtung hat vorzugsweise einen steuerbaren Wärmetauscher oder Wärmeübertrager, über den der Zulauf und der Ablauf außerhalb des Behälters geleitet werden. Insbesondere werden die Zulaufflüssigkeit und die Ablaufflüssigkeit in dem Entgasungsverfahren zumindest einmalig durch den Wärmetauscher geführt. Dadurch kann thermische Energie von der strömenden Ablaufflüssigkeit auf die strömende Zulaufflüssigkeit übertragen werden. Der Wärmetauscher ist vorzugsweise vollständig außerhalb des Behälters angeordnet.

Der Wärmetauscher ist bevorzugt ein Plattenwärmetauscher. Besonders bevorzugt ist die Entgasungsvorrichtung so ausgebildet, dass der Zulauf und der Ablauf im Gegenstrom über den Wärmetauscher, insbesondere den Plattenwärmetauscher, geführt bzw. geleitet werden. Entsprechend können in einem bevorzugten Entgasungsverfahren die Zulaufflüssigkeit und die Ablaufflüssigkeit zumindest einmalig im Gegenstrom durch den Wärmetauscher, insbesondere den Plattenwärmetauscher, geführt werden.

Vorzugsweise ist eine Grädigkeit des Wärmetauschers so bestimmt, dass mittels Schichtungskräften infolge bzw. aufgrund eines Temperaturunterschieds zwischen der Zulaufflüssigkeit und der entgasten und erhitzen Flüssigkeit, die sich bereits im Behälter befindet, eine stabile Schichtung aus der ersten und der zweiten Schicht im Behälter erzeugt wird. Insbesondere ist die Grädigkeit so gewählt, dass Schichtungskräfte durch den Temperaturunterschied zwischen der Zulaufflüssigkeit und der im Behälter befindlichen, entgasten Flüssigkeit eine Mischung der unterschiedlichen Schichten verhindern. Dadurch kann eine Vermischung der ersten Schicht und der zweiten Schicht im Behälter im Wesentlichen ausbleiben. Eine solche vorteilhafte Grädigkeit kann vorzugsweise als Teil des Entgasungsverfahrens eingestellt werden. Vorteilhafterweise kann die Grädigkeit des Wärmetauschers so gewählt sein, dass gashaltiges Wasser, auch bezeichnet als Zulaufwasser, das im Bereich eines (unteren) Klöppelbodens in den Behälter zuläuft, durch thermische Schichtung vom entgasten Wasser (Heißwasser) im Behälter in Form einer eigenen Schicht getrennt bleibt. Die besondere Grädigkeit kann dazu beitragen, dass sich das kältere Zulaufwasser nach dem Einbringen in den Behälter nur unterhalb, bezogen auf die Lotrichtung, des wärmeren entgasten Wassers (Heißwassers) im Behälter befindet.

Vorzugsweise kann der Wärmetauscher so ausgebildet und/oder derart steuerbar sein, dass im Behälter eine Temperatur der erwärmten Zulaufflüssigkeit (Zulaufwasser) zumindest 8 Kelvin und/oder höchstens 40 Kelvin geringer ist, als eine Temperatur der bereits vor dem Zufluss im Behälter befindlichen, entgasten Flüssigkeit. Beispielsweise kann eine Temperatur der erwärmten Zulaufflüssigkeit (Zulaufwasser) zumindest 10 Kelvin, vorzugsweise zumindest 15 Kelvin, bevorzugt zumindest 20 Kelvin, weiter bevorzugt zumindest 25 Kelvin, weiter bevorzugt zumindest 30 Kelvin, weiter bevorzugt zumindest 35 Kelvin geringer sein, als eine Temperatur der bereits vor dem Zufluss im Behälter befindlichen, entgasten Flüssigkeit. Die optimale Auslegung ist z.B. abhängig von der Behältergröße und der Anzahl der Nutzungen. Eine Differenz von weniger als 10 Kelvin kann zu Lasten der Schichtung gehen. Temperaturdifferenzen von kleiner 15 Kelvin lassen sich nur mit speziell ausgebildeten Wärmetauschern und/oder mit zwei Wärmetauschern in Reihe erreichen. Deshalb rechnen sich Temperaturdifferenzen kleiner 15 Kelvin besonders bei größeren Behältern. Temperaturdifferenzen größer 30 Kelvin sind besonders bei kleinen Behältern wirtschaftlich, wenn die verbleibende Wärme aus dem entgasten Wasser genutzt wird, z.B. direkt in ein Heizungsnetz eingespeist wird.

Unter der im Behälter befindlichen, entgasten Flüssigkeit wird Flüssigkeit (Wasser) verstanden, die bereits in dem Entgasungsverfahren entgast wurde bzw. einem Entgasungszyklus unterzogen wurde, die aber (noch) im Behälter ist. Diese entgaste Flüssigkeit bildet die spätere Ablaufflüssigkeit. Vorzugsweise kann das Entgasungsverfahren so durchgeführt werden, dass die erste Schicht und die zweite Schicht im Behälter einen Temperaturunterschied von zumindest 8 Kelvin, vorzugsweise zumindest 15 Kelvin, und/oder höchstens 40 Kelvin, vorzugsweise höchstens 30 Kelvin, haben. Beispielsweise kann kaltes Zulaufwasser (als Zulaufflüssigkeit) mittels des Wärmetauschers von 12°C auf 80°C erwärmt werden. Durch Wärmeübertragung kann das aus dem Behälter ausgeschleuste entgaste Wasser, auch bezeichnet als Ablaufwasser, beispielsweise von 100°C auf 32°C abgekühlt werden. Der Temperaturunterschied der beiden Schichten und/oder die Temperatur des Zulaufwassers kann in Abhängigkeit der Behältergröße bestimmt werden. Die vorgenannten Werte (Temperaturdifferenzen von 8 Kelvin bis 40 Kelvin) sind besonders geeignet bei Behältern mit einem Fassungsvolumen von 50 bis 300 Litern. Technisch gesehen ist jeder Wert zwischen etwa 8 Kelvin und mehr als 40 Kelvin möglich.

Vorteilhafterweise kann durch den vorgenannten Temperaturunterschied, insbesondere zwischen 8 Kelvin und 40 Kelvin, zwischen frischem Zulaufwasser und der im Behälter befindlichen, entgasten Flüssigkeit (Heißwasser) eine besonders stabile Schichtung erreicht und damit eine Durchmischung der Flüssigkeit im Behälter wirksam verhindert werden. Ein weiterer Vorteil ist, dass möglichst wenig Energie zum Erhitzen des neu zugeführten Zulaufwassers im Behälter zum Zweck der Entgasung benötigt wird. Vorteilhafterweise ermöglicht die Entgasungsvorrichtung eine Kombination aus einem geringen Energieverbrauch und einer stabilen Schichtung im Behälter, was sich vorteilhaft auf das Ausschleusen des entgasten Wassers auswirkt. Beide Effekte wirken sich positiv auf die Effizienz der Entgasung aus. Beispielsweise beträgt der elektrische Nachheizbedarf bei 15 Kelvin Temperaturdifferenz ca. 1,76 kWh/100 Liter Zulaufwasser bzw. Nachspeisewasser für einen Entgasungszyklus. Durch Ausdehnung und Verdampfung gehen ca. 1,5 - 2% des entgasten Wassers verloren. Bei 30 Kelvin Temperaturdifferenz beträgt der elektrische Nachheizbedarf ca. 3,6 kWh/100 Liter. Durch Ausdehnung und Verdampfung gehen ca. 2,5 - 4% des entgasten Wassers verloren. Vorteilhafterweise kann durch einen geringen Anteil der Aufheizung erreicht werden, dass möglichst wenig Nutzwasser als Ausdehnungswasser ungenutzt verloren geht. Insbesondere bei kleinen Behältern (z.B. 50 Liter) ist ein höherer prozentualer Nachheizbedarf gegeben.

Der Behälter der Entgasungsvorrichtung umfasst vorzugsweise einen ersten Endabschnitt, der in Lotrichtung weist. Der erste Endabschnitt bildet in Lotrichtung den Abschluss bzw. das Ende des Behälters. Der Behälter kann vorzugsweise eine längliche Form haben, wobei der erste Endabschnitt eine Stirnseite des Behälters bildet. Im bestimmungsgemäßen Betrieb der Entgasungsvorrichtung weist der erste Endabschnitt vorzugsweise nach unten, z.B. in Richtung eines Bodens, auf dem die Entgasungsvorrichtung steht. Entsprechend wird der erste Endabschnitt auch als unterer Endabschnitt bezeichnet. Der erste Endabschnitt weist vorzugsweise die Zuführeinrichtung für die Zulaufflüssigkeit auf. Entsprechend ist die Zuführeinrichtung vorzugsweise innerhalb des Behälters im Bereich des ersten Endabschnitts angeordnet. Folglich befindet sich der Wasserzulauf im unteren Bereich des Behälters.

Gemäß einer allgemeinen Ausführungsform kann die Zuführeinrichtung, insbesondere deren freies Ende, Mittel für eine strömungsberuhigte Zuführung von Zulaufflüssigkeit in den Behälter haben, insbesondere eine Strömungsberuhigung. Diese Mittel können eine Einrichtung zur (messbaren) Verringerung der Einströmgeschwindigkeit in den Behälter umfassen (verglichen mit einer Strömungsgeschwindigkeit der Zulaufflüssigkeit im Zulauf außerhalb des Behälters) und/oder mechanische Einbauten umfassen, insbesondere Prallbleche und/oder Diffusoren im Behälter.

Die Zuführeinrichtung, insbesondere deren freies Ende, hat bevorzugt einen trichterartigen oder trichterförmigen Zulaufquerschnitt. Der trichterförmig erweiterte Zulaufquerschnitt dient zum Einbringen von Zulaufflüssigkeit in den Behälter. Der trichterförmig erweiterte Zulaufquerschnitt kann mittels eines Zulauf-Trichters realisiert sein. Vorzugsweise kann die Zuführeinrichtung einen Zulaufquerschnitt haben, der sich in einer Strömungsrichtung der Zulaufflüssigkeit verbreitert. Insbesondere kann sich der Zulaufquerschnitt in Strömungsrichtung gleichmäßig erweitern. Vorteilhafterweise kann der Bereich, in dem Zulaufflüssigkeit in den Innenraum des Behälters eintritt (Eintrittsbereich), in Lotrichtung trichterförmig erweitert sein. Ein Öffnungswinkel des trichterförmig erweiterten Zulaufquerschnitts (in Richtung eines unteren Klöpperbodens) bzw. des Zulauf-Trichters kann vorzugsweise zumindest 10° und/oder höchstens 20° sein. Prinzipiell kann der Öffnungswinkel auch kleiner 10° sein, z.B. zum Abbau von sehr hohen Strömungsgeschwindigkeiten und zur Kavitationsvermeidung. Weiterhin kann der Öffnungswinkel auch größer 20° sein (Abweichung von der Lotrichtung), insbesondere sofern eine Strömungsrichtung in Richtung eines Bodens des ersten Endabschnitts weist. Vorteilhafterweise kann der Öffnungswinkel in Richtung freies Ende bzw. am freien Ende der Zuführeinrichtung trompetenartig sein und/oder kann wie bei einer Trompete zunehmen. Beispielsweise kann ein Öffnungswinkel in Strömungsrichtung von zunächst 10°, dann 20° usw. bis z.B. 45° zunehmen. Alternativ oder zusätzlich kann die Zuführeinrichtung, insbesondere deren freies Ende, eine oder mehrere Düsen oder Düsenrohre haben, um Zulaufflüssigkeit in den Behälter einzubringen.

Die Zuführeinrichtung ist vorzugsweise so realisiert, dass ein freies Ende der Zuführeinrichtung in Richtung eines Bodens des ersten Endabschnitts des Behälters weist. Bevorzugt kann sich der Zulaufquerschnitt in Richtung des Bodens trichterförmig erweitern. Vorzugsweise kann die Zuführeinrichtung mit einem freien Ende in Richtung eines (unteren) Klöpperbodens des Behälters gerichtet sein. Entsprechend kann der Zulaufquerschnitt in Richtung des (unteren) Klöpperbodens trichterförmig erweitert sein. Der (untere) Klöpperboden ist ein gewölbter Boden, der Teil des ersten Endabschnitts ist. Insbesondere kann der (untere) Klöpperboden den ersten Endabschnitt bilden. Der (untere) Klöpperboden weist in Lotrichtung bzw. bildet in Lotrichtung den Abschluss des Behälters. Entsprechend wird dieser Klöpperboden auch als unterer Klöpperboden bezeichnet. Bei dieser Ausführung kann die Heizeinrichtung, insbesondere das jeweilige Heizelement, auf Höhe des trichterförmig erweiterten Zulaufquerschnitts angeordnet sein (bezogen auf die Lotrichtung) und/oder kann den trichterförmig erweiterten Zulaufquerschnitt zumindest teilweise umgeben bzw. umschließen, insbesondere, sofern mehrere Heizelemente vorgesehen sind.

Alternativ, vorzugsweise zusätzlich, ist die Zuführeinrichtung dazu ausgebildet, um die Zulaufflüssigkeit mit bzw. in einer bestimmten Strömungsrichtung in den Behälter einzubringen, wobei die Strömungsrichtung in Richtung eines Bodens des ersten Endabschnitts weist. Vorzugsweise ist die Strömungsrichtung gegen den unteren Klöpperboden gerichtet. Beispielsweise kann die Strömung gegen eine mittlere kugelförmige Kalotte des unteren Klöpperbodens gerichtet sein.

Vorteilhafterweise können durch die besondere Zuführeinrichtung mit dem trichterförmig erweiterten Zulaufquerschnitt Turbulenzen in der im Behälter befindlichen, entgasten Flüssigkeit durch einströmendes Wasser möglichst vollständig verhindert werden. Ein vergleichbarer Effekt lässt sich erreichen, indem das Zulaufwasser mittels Düsenrohren in den Behälter zufließt. Um das Zulaufwasser besonders zuverlässig turbulenzarm oder turbulenzfrei in den Behälter einzubringen, können beide Merkmale kombiniert werden. Die Erzeugung einer bestimmten Strömungsrichtung im Zulaufwasser beim Eintritt in den Behälter bzw. beim Austritt aus der Zuführeinrichtung kann eine stabile Schichtung im Behälter zusätzlich unterstützen.

Beispielsweise kann die Entgasungsvorrichtung so realisiert sein, dass die Zuführeinrichtung eine Querschnittsaufweitung im Zulauf-Trichter von wenigstens 2 dm² und/oder höchstens 8 dm² hat, bevorzugt etwa 3 dm² (als Zulaufquerschnitt). Der rechnerische Querschnitt des umlaufenden Randes zwischen Zulauf-Trichter und dem unteren Klöpperboden kann eine entsprechende Fläche aufweisen. Bei bevorzugter Auslegung ergeben sich im Betrieb Zulaufgeschwindigkeiten von < 0,01 m/s. Die Entladung kann vorzugsweise mit 0,2 % bis 0,3% des Nutzvolumens des Behälters je Sekunde erfolgen. Die vorgenannten Angaben beziehen sich insbesondere auf einen Behälter mit einem Nutzvolumen von ca. 130 Litern. Der Temperaturverlauf kann bei jedem Wasserwechsel von einer Steuerung der Entgasungsvorrichtung aufgezeichnet und/oder abgebildet werden. Sollte die (Flüssigkeits-)Schichtung im Behälter nicht optimal sein, kann z.B. die Entladegeschwindigkeit reduziert werden. Bei der optionalen Auslegung mit Ventilen für stetige Regelung, Drucksensor und Wasserzähler kann die Anpassung der Entladegeschwindigkeit automatisch über die Steuerung vorgenommen werden. In der Entgasungsvorrichtung kann die (Über-)Druckhaltung mit Regelventilen und dem Drucksensor vorgenommen werden. Die Geschwindigkeit des Wasserwechsels kann mit Hilfe des Mengenimpulses des Wasserzählers kontrolliert werden. Das kann Teil des Entgasungsverfahrens sein.

Es ist auch möglich, dass die Zuführeinrichtung, insbesondere ein freies Ende, von einem Boden des ersten Endabschnitts des Behälters weg weist. Vorzugsweise kann der Wasserzulauf von unten mit Flussrichtung gegen die Lotrichtung realisiert sein. Entsprechend kann eine Strömungsrichtung der Zulaufflüssigkeit von einem Boden des ersten Endabschnitts wegweisen bzw. entgegen der Lotrichtung sein. Vorzugsweise können im Behälter Mittel zur Strömungsberuhigung vorgesehen sein, z.B. als Teil der Zuführeinrichtung. Insbesondere kann eine Strömungsberuhigung durch zumindest eine Lochblechscheibe bzw. Lochscheibe erreicht werden. Diese Lochblechscheibe kann von außen nach innen eine abnehmende Lochdichte haben. Vorzugsweise kann ein mittiger Bereich bzw. eine Mitte der Lochblechscheibe keine Löcher aufweisen bzw. lochfrei sein. Die lochfreie Mitte der Lochblechscheibe ist vorzugsweise oberhalb des Wasserzulaufs angeordnet (entgegen der Lotrichtung). Vorzugsweise kann die Strömungsrichtung auf die Mitte der Lochblechscheibe gerichtet sein. Entsprechend wirkt der mittlere Bereich der Lochblechscheibe, oberhalb des Wasserzulaufs, somit nur als Prallblech. Vorteilhafterweise kann auch dadurch eine stabile Schichtung im Behälter zusätzlich unterstützt werden. Diese Ausführung der Zuführeinrichtung kann alternativ zu einem trichterförmig erweiterten Zulaufquerschnitt verwendet werden. Bei dieser Ausführung kann die Heizeinrichtung direkt oberhalb der Lochblechscheibe angeordnet sein (auf einer vom Boden abgewandten Seite der Lochblechscheibe).

Diese vorgenannten Merkmale tragen alle dazu bei, dass bei einem Wasserwechsel das entgaste Wasser ohne relevanten Kontakt zum neu in den Behälter zugeführten Zulaufwasser aus dem Behälter ausgeschleust werden kann. Vorzugsweise kann die Strömungsrichtung quer zum Klöpperboden und/oder im Wesentlichen orthogonal zum Klöpperboden sein, insbesondere bezogen auf eine mittlere kugelförmige Kalotte des unteren Klöpperbodens. Vorteilhafterweise kann in dem Entgasungsverfahren vorgesehen sein, dass das Zulaufwasser mit der beschriebenen Strömungsrichtung in den Innenraum des Behälters eingebracht wird.

Beispielsweise kann die Entgasungsvorrichtung eine Lochblechscheibe aufweisen, deren Durchmesser wenigstens 50 % und/oder höchstens 80 % eines (Innen-)Durchmessers des Behälters ist, vorzugsweise etwa 70 % des Behälterdurchmessers. Die Lochblechscheibe kann wenigstens 45 und/oder höchstens 1000 Löcher haben, insbesondere 160 Löcher. Ein Durchmesser des jeweiligen Lochs kann wenigstens 1 cm und/oder höchstens 3 cm sein, insbesondere etwa 2 cm. Bei Verwendung von kalkhaltigem Leitungswasser sind kleine Durchmesser zu vermeiden. Eine Querschnittsfläche aller Löcher der Lochblechscheibe kann (in Summe) wenigstens 3 dm² und/oder höchstens 8 dm² sein, vorzugsweise zumindest 4 dm² und/oder bis 5 dm². Während einer Entladung kann eine Strömungsgeschwindigkeit im jeweiligen Loch bzw. durch das Loch hindurch auf < 0,013 m/s, vorzugsweise auf < 0,003 m/s, begrenzt werden. Die Entladung kann vorzugsweise mit 0,2 % bis 0,3% des Nutzvolumens des Behälters je Sekunde erfolgen. Die vorgenannten Angaben beziehen sich insbesondere auf einen Behälter mit einem Nutzvolumen von ca. 130 Litern. Der Temperaturverlauf kann bei jedem Wasserwechsel von der Steuerung aufgezeichnet und/oder abgebildet werden. Sollte die (Flüssigkeits-)Schichtung im Behälter nicht optimal sein, kann z.B. die Entladegeschwindigkeit reduziert werden. Bei der optionalen Auslegung mit Ventilen für stetige Regelung, Drucksensor und Wasserzähler kann die Anpassung automatisch über die Steuerung vorgenommen werden.

Ungeachtet der konkreten Ausführung der Zuführeinrichtung ist die Heizeinrichtung vorzugsweise so ausgebildet, dass zumindest ein Heizelement (oder mehrere Heizelemente) im Bereich des unteren Klöpperbodens angeordnet ist und/oder zumindest abschnittsweise in diesen Bereich eintaucht. Bevorzugt ist das jeweilige Heizelement so angeordnet, dass eine Längsrichtung des Heizelements schräg zur Lotrichtung ist. Insbesondere weicht die Längsrichtung des Heizelements von der Lotrichtung und von einer Horizontalen (quer zur Lotrichtung) ab. Vorteilhafterweise wird dadurch ermöglicht, dass ein Teil der Wärmeabgabe nahe am unteren Boden des Behälters erfolgt, so dass das gesamte Wasser im Behälter auf Siedetemperatur erhitzt werden kann.

Der Behälter der Entgasungsvorrichtung umfasst vorzugsweise einen zweiten Endabschnitt, der entgegen der Lotrichtung weist. Der zweite Endabschnitt bildet in einer Richtung, die der Lotrichtung entgegengesetzt ist, den Abschluss bzw. das Ende des Behälters. Der zweite Endabschnitt kann eine weitere Stirnseite des Behälters bilden. Im bestimmungsgemäßen Betrieb der Entgasungsvorrichtung weist der zweite Endabschnitt vorzugsweise nach oben, z.B. weg von einem Boden, auf dem die Entgasungsvorrichtung steht. Der zweite Endabschnitt liegt vorzugsweise dem ersten Endabschnitt gegenüber bezogen auf eine Längserstreckung des Behälters. Entsprechend wird der zweite Endabschnitt auch als oberer Endabschnitt bezeichnet. Der zweite Endabschnitt weist einen Boden mit einer Austrittsöffnung für Gas und/oder Flüssigkeit auf. Die Austrittsöffnung kann vorzugsweise in einem (oberen) Klöpperboden des Behälters ausgebildet sein. Der (obere) Klöpperboden ist ein gewölbter Boden, der Teil des zweiten Endabschnitts ist. Insbesondere kann der (obere) Klöpperboden den zweiten Endabschnitt bilden. Der (obere) Klöpperboden weist entgegen der Lotrichtung bzw. bildet in einer Richtung entgegen der Lotrichtung den Abschluss des Behälters. Entsprechend wird dieser Klöpperboden auch als oberer Klöpperboden bezeichnet.

Die Austrittsöffnung für Gas und/oder Flüssigkeit ist vorzugsweise an einem Endpunkt des Behälters entlang der Lotrichtung ausgebildet, insbesondere im oberen Klöpperboden. Diese Öffnung ist vorzugsweise an einem obersten oder höchsten Punkt des Behälters bzw. des oberen Klöpperbodens ausgebildet, im bestimmungsgemäßen Betrieb der Entgasungsvorrichtung. Diese Öffnung hat vorzugsweise einen Anschlusspunkt und/oder eine Kopplungsstelle für weitere Elemente der Entgasungsvorrichtung.

Die Austrittsöffnung oder Öffnung weist zumindest ein Überdruckventil und/oder zumindest ein steuerbares Ventil auf. Das steuerbare Ventil ist vorzugsweise zur Ableitung von Gas, das aus der Flüssigkeit im Behälter austritt, aus dem Behälter, und/oder zur Ableitung von Flüssigkeit aus dem Behälter ausgebildet. Vorzugsweise hat die Austrittsöffnung einen Anschluss für die, z.B. reversible, Montage von einem Überdruckventil und von einem steuerbaren Ventil. Die Funktion des steuerbaren Ventils wird vorzugsweise in dem Entgasungsverfahren gesteuert. Das Ventil kann elektrisch betätigt sein. Vorteilhafterweise kann mittels der Öffnung und/oder mittels des Ventils das austretende Gas und das Ausdehnungswassers, das während der Aufheizung der Flüssigkeit im Behälter entsteht, kontrolliert aus dem Behälter abgeleitet werden. Das Ausdehnungswasser kann in einen Abfluss geleitet werden. Das austretende Gas kann in einen Betriebsraum entweichen. Die Auftrennung findet vorzugsweise in einem Entspannungsrohr statt. Das Entspannungsrohr kann Teil der Entgasungsvorrichtung sein. Das Überdruckventil ermöglicht aus Sicherheitsgründen den Austritt von Gas und/oder Flüssigkeit aus dem Behälter.

Der zweite, obere Endabschnitt des Behälters weist vorzugsweise die Entnahmeeinrichtung für die Ablaufflüssigkeit auf. Entsprechend ist die Entnahmeeinrichtung, insbesondere ein freies Ende, vorzugsweise innerhalb des Behälters im Bereich des zweiten Endabschnitts angeordnet. Folglich befindet sich der Wasserablauf vorzugsweise im oberen Bereich des Behälters. Entsprechend können Wasserzulauf und Wasserablauf einander gegenüberliegen, bezogen auf die Längserstreckung des Behälters.

Die Entnahmeeinrichtung umfasst vorzugsweise eine Entladeleitung mit einem freien Ende, das in Richtung eines oberen Bodens des zweiten Endabschnitts weist. Vorzugsweise kann die Entladeleitung mit einem freien Ende in Richtung des oberen Klöpperbodens des Behälters gerichtet sein.

Alternativ, vorzugsweise zusätzlich, ist ein Ansaugpunkt der Entnahmeeinrichtung für entgaste Flüssigkeit in unmittelbarer Nähe zu einem Boden des zweiten Endabschnitts, insbesondere dem oberen Klöpperboden, angeordnet. Vorteilhafterweise kann die Entladeleitung gegen den oberen Klöpperboden gerichtet sein. Der Ansaugpunkt kann einige Zentimeter vom oberen Boden bzw. vom oberen Klöpperboden beabstandet sein, so dass etwaige Gasbläschen nicht mit dem Ablaufwasser bzw. der entgasten Flüssigkeit abgeleitet werden. Ein Abstand zwischen dem Ansaugpunkt der Entnahmeeinrichtung und einer Innenwand des oberen Bodens bzw. Klöpperbodens kann vorzugsweise zumindest 5cm, bevorzugt zumindest 8cm, insbesondere zumindest 12cm, sein (entspricht ca. 40 bis 60% der Aufbauhöhe des Klöpperbodens). Der Ansaugpunkt kann auch als Entnahmestelle bezeichnet werden.

Die Entgasungsvorrichtung kann zumindest eines der folgenden Elemente aufweisen, bevorzugt eine beliebige Kombination daraus oder alle Elemente: zumindest ein steuerbares Ventil, das Teil des Zulaufs ist, optional ein Ventil für stetige Regelung, das Teil des Zulaufs ist, insbesondere mit einem Sensor zur Druckerfassung, und einen Wasserzähler mit Mengenimpulsausgang, zumindest einen Druckminderer, der Teil des Zulaufs ist, zumindest ein steuerbares Ventil, das Teil des Ablaufs ist, zumindest einen Regler, der Teil des Ablaufs ist, wobei mittels des Reglers ein Druck im Behälter bei einem Flüssigkeitswechsel möglichst konstant gehalten wird, insbesondere ein Überdruck im Behälter, so dass Ausgasen verhindert wird, optional ein Ventil für stetige Regelung, das Teil des Ablaufs ist, insbesondere mit einem Sensor zur Druckerfassung. Beispielsweise kann die Entgasungsvorrichtung als Teil des Ablaufs ein Ventil für stetige Regelung und einen Sensor zur Druckerfassung haben, um einen Überdruck im Behälter konstant zu halten (z.B. anstelle des zusätzlichen Druckreglers). Die Funktion der genannten Elemente wird nachfolgend im Kontext des Entgasungsverfahrens beschrieben. Der Betrieb der genannten Elemente und weiterer Elemente der Entgasungsvorrichtung, die an der Entgasung und/oder am Wasserwechsel beteiligt sind, wird vorzugsweise mittels einer Steuereinrichtung gesteuert. Die Steuereinrichtung kann Teil der Entgasungsvorrichtung sein. Alternativ oder zusätzlich können die Elemente mittels einer externen Steuereinrichtung gesteuert werden bzw. das Entgasungsverfahren kann mittels einer externen Steuereinrichtung durchgeführt werden. Allgemein ist die Steuereinrichtung vorzugsweise dazu ausgebildet, um die beschriebenen Verfahrensschritte auszuführen und/oder um die beteiligten Elemente der Entgasungsvorrichtung mit entsprechenden (Steuer-)Signalen zu beaufschlagen, so dass eine bestimmungsgemäße Funktion erreicht wird. Vorzugsweise sind die beschriebenen Elemente der Entgasungsvorrichtung dazu ausgebildet und/oder sind so steuerbar, um die im Entgasungsverfahren vorgesehene Funktion bzw. Wirkung zu erreichen.

Das Entgasungsverfahren kann vorzugsweise die nachfolgend beschriebenen Verfahrensschritte umfassen. In einem Schritt i) des Verfahrens sind die Ventile im Zulauf und im Ablauf geschlossen oder werden geschlossen. In einem Schritt ii) wird das Ventil, das der Austrittsöffnung im Behälter zugeordnet ist, zeitweise geöffnet. In einem Schritt iii) wird die Beheizung der Flüssigkeit im Behälter gestartet, wozu die Heizeinrichtung aktiviert wird. In einem Schritt iv) wird die Beheizung der Flüssigkeit im Behälter beendet. Die Heizeinrichtung wird in Schritt iv) abgeschaltet. Die vorgenannten Schritte i-iv) sind an der eigentlichen Entgasung des Wassers im Behälter beteiligt bzw. bewirken die Entgasung. Diese Schritte i-iv) können in einem Betriebsmodus der Entgasungsvorrichtung zusammengefasst sein, in dem die Entgasung des Wassers im Behälter erfolgt.

Ein weiterer Betriebsmodus der Entgasungsvorrichtung betrifft die Abgabe des entgasten Wassers bzw. den Wasserwechsel. In einem Schritt v) wird das Ventil, das der Austrittsöffnung zugeordnet ist, geschlossen. In einem Schritt vi) werden die Ventile im Zulauf und im Ablauf, vorzugsweise gleichzeitig, geöffnet für einen Wasserwechsel. Während des Wasserwechsels wird einerseits entgastes heißes Wasser als Ablaufwasser aus dem Behälter abgeführt. Das heiße entgaste Wasser wird im Gegenstrom mit dem kalten gashaltigen Zulaufwasser im Zulauf über den Plattenwärmetauscher geführt. Die Abgabe des entgasten Wassers, z.B. an ein Heizungsnetz, wird über das zugeordnete z.B. elektrisch betätigte Ventil im Ablauf gesteuert. Die Wasserabgabe kann durch einen Regler so gedrosselt werden, dass im Behälter ein ausreichender Druck erhalten bleibt, der das Entgasen der Flüssigkeit im Behälter während des Wasserwechsels verhindert. Alternativ kann das Verfahren beinhalten, dass während der Wasserabgabe ein Druck, insbesondere ein Überdruck, im Behälter mittels eines Ventils für stetige Regelung und eines Sensors zur Druckerfassung konstant gehalten wird.

Während des Wasserwechsels in Schritt vi) wird andererseits mittels der Zuführeinrichtung kälteres gashaltiges Wasser in den unteren Endabschnitt des Behälters möglichst turbulenzfrei eingebracht. Der Zulauf wird über das zugeordnete z.B. elektrisch betätigte Ventil gesteuert. Der Zulaufdruck kann bei Bedarf über einen Druckminderer begrenzt werden. Das in den Behälter einströmende kältere Frischwasser bildet eine eigene Schicht im Behälter, die sich nicht oder nicht nennenswert mit der anderen Schicht im Behälter mischt, die vorzugsweise aus bereits entgastem, heißem Wasser besteht. Das Verfahren wird bevorzugt so durchgeführt, dass ein Temperaturunterschied im Wasser der unterschiedlichen Schichten zwischen 8 Kelvin und 40 Kelvin ist, insbesondere zwischen 10 Kelvin und 30 Kelvin.

In Schritt vii) wird der Wasserwechsel beendet. Das kann der Fall sein, wenn ein Bedarf an gasfreiem Wasser bzw. an Nachspeisewassser gedeckt ist. Es kann auch vorgesehen sein, dass der Wasserwechsel beendet wird, sobald das entgaste Wasser (eine maximal vorgesehene Menge) komplett aus dem Behälter entnommen wurde. Um den Wasserwechsel zu beenden, können die Ventile im Zulauf und im Ablauf vorzugsweise gleichzeitig geschlossen werden. Der Behälter ist zu diesem Zeitpunkt für einen nachfolgenden Entgasungszyklus mit Wasser gefüllt.

In einem Schritt viii) kann entschieden werden, ob direkt ein weiterer Entgasungszyklus durchgeführt wird, wozu ein Wechsel zu Schritt i) des Verfahrens erfolgt. Sofern aktuell kein Bedarf an entgastem Wasser besteht, kann die Entgasungsvorrichtung in einem Schritt ix) in einen Standby-Betrieb wechseln. Im Standby-Betrieb ist die Ventilstellung wie in Schritt i) des Verfahrens, wobei die Heizeinrichtung inaktiv ist. Sobald Bedarf besteht, kann ein Wechsel zu Schritt i) des Verfahrens erfolgen. Die zuvor beschriebenen Schritte müssen nicht zwingend in der genannten Reihenfolge ausgeführt werden, wobei auch mehrere Schritte im Wesentlichen gleichzeitig ausgeführt werden können oder auch einzelne Schritte ausgelassen oder zusätzliche Schritte oder Teilschritte vorgesehen sein können.

Nachfolgend werden Einzelheiten des Verfahrens genauer beschrieben, wobei die Verfahrensschritte nicht in der bevorzugten Reihenfolge wiedergegeben sind. In dem Entgasungsverfahren kann vorgesehen sein, dass die Flüssigkeit im Behälter zur Entgasung beheizt wird mittels der Heizeinrichtung (Schritt iii) des Verfahrens), insbesondere auf Siedetemperatur. Optional kann in Schritt iii) ein Unterdruck im Behälter erzeugt werden. Die Beheizung kann beendet werden, wenn an einem Temperaturfühler der Entgasungsvorrichtung, der im Bereich der Entnahmeeinrichtung angeordnet ist, für eine definierte Zeitspanne bzw. Dauer kein Temperaturanstieg erfasst wird. Beispielsweise kann die Beheizung beendet werden, sofern über eine oder zwei Minuten kein weiterer Temperaturanstieg gemessen wird. Der Temperaturfühler kann die Temperaturänderung und/oder eine absolute Temperatur der Flüssigkeit messen. Die Beheizung wird vorzugsweise in Schritt iv) des Verfahrens gestoppt.

Optional kann in Schritt iv) eine zusätzliche Nachheizzeit vorgesehen sein, bevor die Beheizung beendet wird, deren Dauer in Abhängigkeit einer Temperaturdifferenz der Flüssigkeit im Behälter zur Siedetemperatur bestimmt wird. Beispielsweise kann für jedes Kelvin, das die gemessene Temperatur unterhalb der Siedetemperatur liegt, eine zusätzliche Nachheizzeit von einer Minute oder zwei Minuten vorgesehen sein. Wegen möglicher Messtoleranzen kann eine Nachheizzeit vorgesehen sein, um das Erreichen der Siedetemperatur sicherzustellen und zusätzlich eine gesicherte Abschaltung der Heizeinrichtung zu erreichen. Während der Entgasung sind der Zulauf und der Ablauf, insbesondere beide, vorzugsweise geschlossen. Dazu kann jeweils ein steuerbares Ventil im Zulauf und im Ablauf vorübergehend geschlossen werden, so dass der Zulauf und der Ablauf nicht von Flüssigkeit durchströmt werden. Das kann in Schritt i) des Verfahrens erfolgen oder bereits am Ende eines vorhergehenden Wasserwechsels, z.B. in einem Schritt vii) des Verfahrens. Somit strömt während der Entgasung weder Zulaufflüssigkeit in den Behälter noch Ablaufflüssigkeit aus dem Behälter. Allerdings kann Ausdehnungswasser aus dem Behälter austreten.

Vorzugsweise kann zur Entgasung bzw. währenddessen vorgesehen sein, dass aus der Flüssigkeit austretendes Gas und/oder Flüssigkeit durch ein steuerbares Ventil jeweils aus dem Behälter abgeleitet werden. Dazu kann das Ventil, z.B. ein elektrisch betätigtes Ventil, das der Austrittsöffnung im Behälter zugeordnet ist, zeitweise geöffnet werden. Das erfolgt vorzugsweise in Schritt ii) des Entgasungsverfahrens. Vorzugsweise kann am Ende von Schritt iv) des Entgasungsverfahrens die Flüssigkeit im Behälter, insbesondere das gesamte Flüssigkeitsvolumen, so entgast sein, dass die Flüssigkeit eine gewünschte Reinheit bzw. Qualität erfüllt. Die Schritte i) bis iv) betreffen also die eigentliche Entgasung der Flüssigkeit.

In den weiteren Schritten v) bis vii) erfolgt eine Entnahme des entgasten Wassers bzw. ein Wasser- oder Flüssigkeitswechsel. Die Abgabe von entgastem Wasser kann vorzugsweise in Form eines Wasserwechsels realisiert sein. Entsprechend kann während einer Abgabe von entgastem Wasser über den Ablauf ein gleichgroßes Volumen und/oder eine gleichgroße Menge gashaltiges Wasser über den Zulauf in den Behälter eingebracht werden.

Für einen Flüssigkeits- bzw. Wasserwechsel kann zunächst das Ventil, das der Austrittsöffnung im Behälter zugeordnet ist, geschlossen werden (Schritt v) des Verfahrens). Für den Wasserwechsel können anschließend der Zulauf und der Ablauf geöffnet werden, z.B. gleichzeitig. Vorzugsweise werden in einem vi) Schritt die jeweiligen steuerbaren Ventile im Zulauf und im Ablauf vorübergehend geöffnet, so dass der Zulauf und der Ablauf von Flüssigkeit durchströmt werden. Die Entnahme von entgaster Flüssigkeit bzw. entgaster Ablaufflüssigkeit kann mittels eines Reglers der Entgasungsvorrichtung so gesteuert werden, dass ein Druck im Behälter gehalten wird, um ein Ausgasen der Flüssigkeit im Behälter zu verhindern. Dazu kann während des Wasserwechsels ein Druck, insbesondere ein Überdruck, im Behälter konstant gehalten werden (Schritt vi) des Verfahrens). Die Abgabe von entgastem Wasser kann durch den Regler soweit gedrosselt werden, dass im Behälter ein ausreichender Druck erhalten bleibt, der das Entgasen während des Wasserwechsels verhindert. Ein Druck im Behälter während des Wasserwechsels kann beispielsweise zumindest 3 bar und/oder höchstens 5 bar sein.

Für den Wasserwechsel bzw. bei der Entnahme von entgastem Wasser kann über den Zulauf, vorzugsweise kaltes bzw. untemperiertes, Frischwasser z.B. Leitungswasser im Gegenstrom mit dem erhitzten entgasten Wasser über den Wärmetauscher geführt werden (Schritt vi) des Verfahrens). Dadurch kann das gashaltige Zulaufwasser erwärmt und mit einer Solltemperatur mittels der Zuführeinrichtung in den Behälter eingebracht werden. Vorzugsweise kann ein Druck des Zulaufwassers (Zulaufdruck) optional durch einen Druckminderer begrenzt werden. Dieser Druckminderer ist vorzugsweise stromaufwärts des steuerbaren Ventils im Zulauf und/oder stromaufwärts des Wärmetauschers angeordnet.

Das entgaste Wasser kann über den Ablauf z.B. an ein Heizungsnetz abgegeben werden. Die Abgabemenge kann über das steuerbare Ventil des Ablaufs reguliert werden (Schritt vi) des Verfahrens). Der optionale Regler des Ablaufs ist vorzugsweise stromabwärts des steuerbaren Ventils und/oder stromabwärts des Wärmetauschers angeordnet. Die Begriffe stromaufwärts und stromabwärts beziehen sich auf die bestimmungsgemäße Strömungsrichtung in der Entgasungsvorrichtung und zwar ausgehend von einem Anschluss für gashaltiges Wasser, z.B. Kaltwasser, in Richtung eines Anschlusses für gasfreies Wasser. Während der Abgabe von entgastem Wasser ist die Heizeinrichtung vorzugsweise vorübergehend abgeschaltet.

In dem Entgasungsverfahren kann vorgesehen sein, dass der Flüssigkeitswechsel beendet wird, wenn eine Höchstmenge an entgaster Flüssigkeit bzw. entgaster Ablaufflüssigkeit aus dem Behälter entnommen wurde, wobei als Abbruchkriterium ein sprunghafter Temperaturabfall am Temperaturfühler genutzt wird, z.B. ein plötzlicher Temperaturabfall von 2-5 Kelvin. Das kann in Schritt vii) des Verfahrens erfolgen. Vorzugsweise kann ein Temperaturabfall des Wassers von zumindest 2 Kelvin, bevorzugt zumindest 3 Kelvin, weiter bevorzugt zumindest 4 Kelvin, weiter bevorzugt zumindest 5 Kelvin innerhalb kurzer Zeit, z.B. in weniger als 20Sekunden, als Kriterium zur Beendigung des Wasserwechsels genutzt werden. Vorzugsweise ist der Temperaturfühler in Lotrichtung unterhalb des Ansaugpunkts der Entnahmeeinrichtung montiert. Beispielsweise kann der Temperaturfühler 5cm bis 15cm vom Ansaugpunkt beabstandet sein. Die Entladung kann vorzugsweise mit 0,2 bis 0,3% des Nutzvolumens je Sekunde erfolgen. Dadurch kann die Wasserentnahme rechtzeitig gestoppt werden, sobald eine maximal vorgesehene Menge an entgastem Wasser entnommen wurde. Beim Wasserwechsel wird das entnommene entgaste Wasser durch nachfließendes gashaltiges Zulaufwasser ersetzt, wobei die Temperatur des Zulaufwassers messbar geringer ist, als die Temperatur des entgasten Wassers. Beim Wasserwechsel wird eine Grenze oder Ebene zwischen den beiden Flüssigkeitsschichten entgegen der Lotrichtung im Behälter nach oben verlagert. Mit anderen Worten kann das entgaste heiße Wasser durch das von unten nachströmende kältere Zulaufwasser entgegen der Lotrichtung im Behälter nach oben bewegt bzw. gedrückt werden. Vorteilhafterweise ist die Entgasungsvorrichtung dazu ausgebildet, um das Zulaufwasser unter Aufrechterhaltung der Schichtung in den Behälter einzubringen.

Vorzugsweise kann der Messfühler anhand des Temperaturabfalls erkennen, dass das gashaltige Wasser die Höhe des Messfühlers erreicht hat. Dann ist eine maximal vorgesehene Menge entgastes Wasser aus dem Behälter komplett entnommen worden. Vorteilhafterweise ist die Grädigkeit des Wärmetauschers so gewählt, dass das Zulaufwasser im Hinblick auf die Energieeffizienz möglichst stark erwärmt wird, wobei die Temperatur zwischen erwärmtem Zulaufwasser und heißem entgastem Wasser im Behälter (noch) groß genug ist, so dass die Temperaturschicht mit dem Zulaufwasser auch bei schneller Wasserentnahme zuverlässig erkannt wird anhand des Temperaturabfalls. Optional oder zusätzlich kann in diesem Schritt vii) vorgesehen sein, dass der Wasserwechsel beendet wird, wenn der Bedarf an Nachspeisewassser gedeckt ist. Entsprechend ist eine Teilentnahme von entgastem Wasser aus dem Behälter möglich.

In einem weiteren Schritt viii) des Entgasungsverfahrens, der sich vorzugsweise an Schritt vii) anschließt, kann die Entgasungsvorrichtung in Abhängigkeit des Bedarfs an entgastem Wasser gesteuert werden. Schritt viii) kann also eine Entscheidungslogik beinhalten. Es ist möglich, dass unmittelbar ein weiteres Flüssigkeitsvolumen entgast werden soll, wobei dann ein Wechsel zu Schritt i) erfolgt. Entsprechend kann die Entgasungsvorrichtung einen weiteren Zyklus mit den Schritten i) bis viii) durchlaufen. Allerdings kann in Schritt viii) auch bestimmt werden, dass die Entgasungsvorrichtung in einen Standby-Betrieb wechselt. Entsprechend kann in einem Schritt ix) des Verfahrens die Entgasungsvorrichtung in einen Standby-Betrieb verbracht werden. Im Standby-Betrieb können die Ventile gemäß Schritt i), optional gemäß Schritt ii), des Entgasungsverfahrens geschaltet werden, wobei die Heizeinrichtung inaktiv ist. Ausgehend von Schritt ix) kann die Entgasungsvorrichtung zu einem späteren Zeitpunkt, sobald Bedarf an entgastem Wasser besteht, einen weiteren Zyklus mit den Schritten i) bis viii) ausführen.

Das Entgasungsverfahren und die Entgasungsvorrichtung sind bevorzugt für einen diskontinuierlichen (Entgasungs-)Betrieb ausgelegt. Das bedeutet, dass die Entgasung von Flüssigkeit schrittweise bzw. intermittierend erfolgt. Entsprechend erfolgt der Prozess des Entgasens einerseits und die Entnahme des entgasten Wassers andererseits nacheinander und in unterschiedlichen Schritten des Entgasungsverfahrens, also nicht gleichzeitig. Folglich wird ein kontinuierlicher Entgasungsprozess vermieden. Ein ständiger Zu- und Abfluss von Flüssigkeit könnte sich nachteilig auf die Stabilität der Schichtung der Flüssigkeit im Tank auswirken.

Das Entgasungsverfahren und die Entgasungsvorrichtung sind bevorzugt so ausgebildet, dass jeweils ein gesamtes Flüssigkeitsvolumen im Tank auf einmal entgast wird (Schritte i) bis iv) des Verfahrens). Das Volumen des Behälters sollte so gewählt werden, dass täglich mehrere Entladezyklen genutzt werden. Je nach Tagesbedarf kann die Entgasung in isolierten Behältern oder Boilern mit einem Fassungsvolumen von z.B. 50-300 Litern vorgenommen werden. Vorteilhafterweise kann die entgaste Flüssigkeit teilweise oder vollständig (bis zu einer Maximalmenge) aus dem Behälter entnommen werden. Ein wichtiges Merkmal der Erfindung ist, dass die Flüssigkeit zum Zweck der Entgasung, insbesondere als Fluss, von einem unteren Boden des Behälters in Richtung eines gegenüberliegenden oberen Bodens des Behälters geführt wird. Insbesondere kann die Flüssigkeit in dem Entgasungsverfahren schichtweise bzw. in Form von zwei Schichten durch das Innere des Behälters bewegt werden. Während der eigentlichen Entgasung ist die (gesamte) Flüssigkeit im Behälter vorzugsweise (nur) durch die Thermik der Beheizung und durch aufsteigende Gas- und/oder Dampfblasen in Bewegung, nicht jedoch durch Wasserzulauf und/oder Entnahme. Die Entgasungsvorrichtung ist für diese Verfahrensführung entsprechend konstruiert.

Das Entgasungsverfahren und die Entgasungsvorrichtung sind bevorzugt so realisiert, dass der eigentliche Entgasungseffekt der Flüssigkeit im Behälter, d.h. das Entfernen von unerwünschten Gasen, ausschließlich mittels der Heizeinrichtung bewirkt wird. Dazu können ein oder mehrere elektrische Heizstäbe genutzt werden, die im Tank angeordnet sind. Dadurch kann eine einfache und robuste Konstruktion der Entgasungsvorrichtung erreicht werden, wobei z.B. auf die Bereitstellung von Dampf verzichtet werden kann. Die Kombination mit Unterdruck ist nur optional.

Die Erfindung wird im Folgenden unter Hinweis auf die beigefügten Figuren anhand von Ausführungsbeispielen noch einmal näher erläutert. Die Figuren sind nicht maßstäblich. Es zeigen:
Figur 1 eine schematische Darstellung einer Entgasungsvorrichtung gemäß der Erfindung,
Figur 2 ein Flussdiagramm eines Ausführungsbeispiels eines Verfahrens gemäß der Erfindung,
Figuren 3 und 4 schematische Darstellungen von Teilen einer Entgasungsvorrichtung gemäß der Erfindung,
Figuren 5 und 6 schematische Darstellungen von Entgasungsvorrichtungen gemäß der Erfindung.

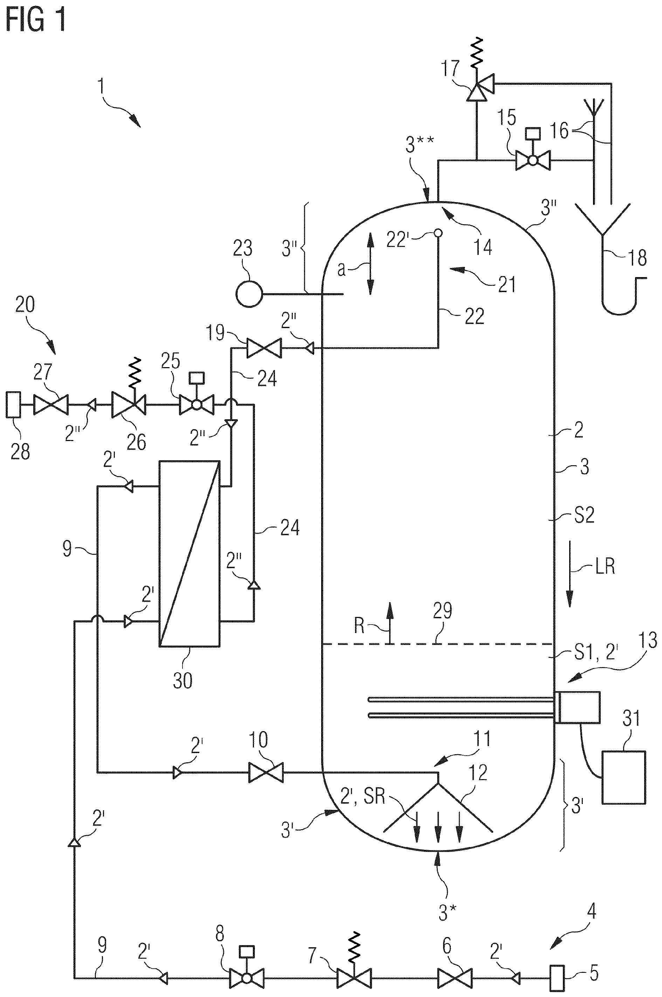

Anhand von Figur 1 wird ein Ausführungsbeispiel einer Entgasungsvorrichtung gemäß der Erfindung beschrieben. Figur 1 ist nach der Art eines Schaltplans aufgebaut, wobei die Strömungsrichtung von Flüssigkeit mit Pfeilen symbolisiert ist. Die Entgasungsvorrichtung 1 ist teilweise im Schnitt gezeigt. Die Entgasungsvorrichtung 1 umfasst als wesentliche Komponenten einen Behälter 3 oder Boiler 3, einen Zulauf 4 für Flüssigkeit, einen Ablauf 20 für Flüssigkeit und einen Wärmetauscher 30. In der Beschreibung wird davon ausgegangen, dass die Flüssigkeit vollentsalztes Wasser ist, ohne die Erfindung darauf zu beschränken.

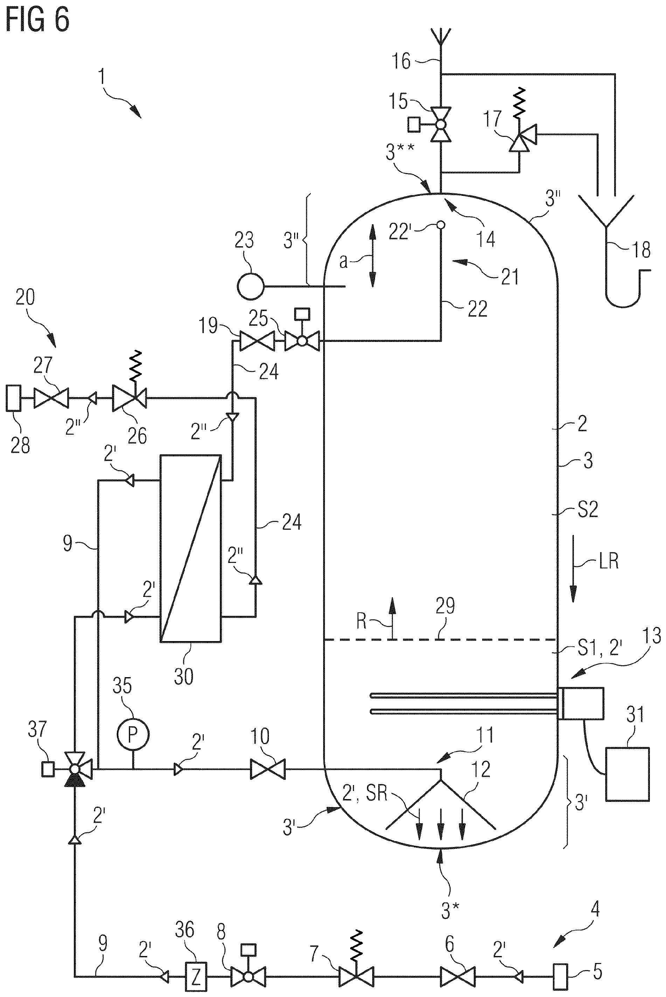

Die Zufuhr von Wasser 2', z.B. Leitungswasser, in den Behälter 3 erfolgt mittels des Zulaufs 4. Der Zulauf 4 hat hier rechts einen Anschluss 5 für Frischwasser, über den gashaltiges Wasser 2' als Zulaufflüssigkeit 2' in den Zulauf 4 einströmt. Das gashaltige Wasser 2' kann gewöhnliches, kaltes Leitungswasser bzw. Trinkwasser sein. Für die Einspeisung in ein Heizungsnetz wird vorzugsweise vollentsalztes Wasser verwendet. Über den Anschluss 5 kann die Entgasungsvorrichtung 1 z.B. mit einem externen Wassernetz verbunden werden. Das gashaltige Wasser 2', das auch als Frischwasser bezeichnet wird, durchströmt eine Leitung 9 des Zulaufs 4, wobei eine Strömungsrichtung ausgehend vom Anschluss 5 in Richtung des Behälters 3 ist. Die Leitung 9 weist stromabwärts des Anschlusses 5 ein Absperrventil 6 auf, an das sich wiederum stromabwärts ein Druckminderer 7 anschließt. Der Begriff stromabwärts bzw. stromaufwärts bezieht sich auf die vorgesehene Strömungsrichtung von Wasser in der Entgasungsvorrichtung 1, die hier mittels Pfeilen symbolisiert ist. In der Leitung 9 ist ein elektrisch zu betätigendes Ventil 8 angeordnet, hier ein Motorkugelhahn 8, der zwischen dem Druckminderer 7 und dem Wärmetauscher 30 bzw. einem Wasserzähler mit Mengenimpulsausgang (Figur 6) angeordnet ist. Das Ventil 8 kann optional für eine stetige Regelung ausgebildet sein. Über den Motorkugelhahn 8 kann der Zulauf von Frischwasser im Zulauf 4 gesteuert werden. Ein Druck des zulaufenden gashaltigen Wassers 2' (Zulaufdruck) kann bei Bedarf über den Druckminderer 7 begrenzt werden.

Das gashaltige Wasser 2' wird mittels der Leitung 9 zum Wärmetauscher 30 geführt. Der Zulauf 4 und der Ablauf 20 werden im Gegenstrom über den Wärmetauscher 30, hier ein Plattenwärmetauscher 30, geführt. Entsprechend nimmt das gashaltige Wasser 2' beim Durchströmen des Wärmetauschers 30 thermische Energie des entgasten Wassers 2" bzw. der Ablaufflüssigkeit 2" auf, welches im Gegenstrom über den Plattenwärmetauscher 30 geführt wird. Durch den Wärmetauscher 30 kann das Frischwasser im Zulauf 4 z.B. von 12°C auf 80°C erwärmt werden. Entsprechend kann das heiße entgaste Wasser 2", das aus dem Behälter 3 ausströmt, von z.B. 100°C auf 32° abgekühlt werden. Das sodann erwärmte gashaltige Wasser 2' strömt vom Wärmetauscher 30 mittels einer Leitung 9 in Pfeilrichtung in das Innere des Behälters 3 ein. In diesem Beispiel ist außerhalb des Behälters 3 ein Absperrventil 10 in der Leitung 9 vorgesehen, das vor allem bei Revisionsarbeiten an außenliegenden Bauteilen zum Einsatz kommen kann, oder um den Zulauf von Wasser 2' in den Tank 3 bzw. in den Boiler 3 manuell zu steuern.

Der Behälter 3 hat einen unteren ersten Endabschnitt 3', der in Lotrichtung LR gerichtet ist. Der untere Endabschnitt 3' wird hier durch einen unteren Klöpperboden 3' gebildet. Der untere Klöpperboden 3' bildet einen unteren Boden 3* des Behälters 3. Im gegenüberliegenden Bereich hat der Behälter 3 einen zweiten oberen Endabschnitt 3", der entgegen der Lotrichtung LR weist. Der zweite obere Endabschnitt 3" wird hier durch einen oberen Klöpperboden 3" gebildet. Der obere Klöpperboden 3" bildet einen oberen Boden 3** des Behälters 3.

Der Wasserzulauf befindet sich im unteren Bereich des Behälters 3, also im ersten unteren Endabschnitt 3'. Dazu beinhaltet der Behälter 3 eine Zuführeinrichtung 11, die zumindest teilweise, insbesondere mit ihrem freien Ende, in den unteren Endabschnitt 3' hineinreicht. Die Zuführeinrichtung 11 ist mit der Leitung 9 verbunden und wird darüber mit gashaltigem Wasser 2' versorgt. Die Zuführeinrichtung 11 hat endseitig einen trichterartigen Zulaufquerschnitt, hier einen Erweiterungstrichter 12. Es ist erkennbar, dass die Zuführeinrichtung 11 mit ihrem freien Ende, hier mit dem Erweiterungstrichter 12, in Richtung des unteren Klöpperbodens 3' weist. Dadurch, dass die Zuführeinrichtung 11 einen Zulaufquerschnitt bildet, der in Richtung des unteren Klöpperbodens 3' trichterförmig erweitert ist, können Turbulenzen durch einströmendes Wasser 2' in der Flüssigkeit 2, 2' im Behälter 3 vermieden werden. Mittels der Zuführeinrichtung 11 strömt das gashaltige Wasser 2' so in den Behälter 3 ein, dass eine Strömungsrichtung SR gegen den unteren Klöpperboden 3' gerichtet ist. Die Strömungsrichtung SR kann quer, z.B. im Wesentlichen orthogonal, bezogen auf eine mittlere kugelförmige Kalotte des unteren Klöpperbodens 3' sein. Anders als hier gezeigt, kann die Zuführeinrichtung 11 alternativ oder zusätzlich eine oder mehrere Düsen zum Einbringen des gashaltigen Wassers 2' in den Behälter 3 haben.

Über die Zuführeinrichtung 11 wird das gashaltige Wasser 2' möglichst turbulenzfrei so in den unteren Bereich des Behälters 3 eingebracht, dass die gesamte Flüssigkeit 2, 2' im Behälter 3 eine Temperaturschichtung aufweist. Der Behälter 3 kann im Regelbetrieb bereits ein gewisses Flüssigkeitsvolumen enthalten, so dass das gashaltige Wasser 2' in einen teilweise oder vollständig mit Flüssigkeit 2 gefüllten Behälter 3 eingebracht wird. Mittels der Zuführeinrichtung 11 kann das gashaltige Wasser 2' so in den Behälter 3 einströmen, dass das gashaltige Wasser 2' eine erste Schicht S1 bildet, wobei das entgaste Wasser 2, das zuvor bereits im Behälter 3 befindlich war, eine unterschiedliche, zweite Schicht S2 bildet. Vorteilhafterweise kann mittels der Zuführeinrichtung 11 und aufgrund des Temperaturunterschieds zwischen gashaltigem Wasser 2' und bereits entgastem Wasser 2 erreicht werden, dass das neu zugeführte gashaltige Wasser 2' eine eigene Schicht S1 bildet, die sich zunächst nur im unteren Endabschnitt 3' bildet. Die erste Schicht S1 aus gashaltigem Wasser 2' und die zweite Schicht S2 aus entgastem Wasser 2 sind durch eine (idealisierte) Grenze 29 separiert bzw. grenzen in einer Ebene 29 aneinander.

Der Zulauf von Frischwasser über die Zuführeinrichtung 11 bewirkt, dass sich das Volumen der ersten Schicht S1 vergrößert, so dass die Grenze 29 bzw. Ebene 29, in der die beiden Schichten S1, S2 aufeinandertreffen, entgegen der Lotrichtung LR hier in Richtung R nach oben bewegt wird.

Dieser Zustand entspricht einem Wasserwechsel, wobei gleichzeitig gashaltiges Wasser 2' über den Zulauf 4 zugeführt und entgastes Wasser 2, als Ablaufflüssigkeit 2", über den Ablauf 20 abgeleitet wird. Der Behälter 3 beinhaltet eine Heizeinrichtung 13, hier einen Heizstab, um die Flüssigkeit 2, 2' im Behälter 3 auf Siedetemperatur zu beheizen. Unabhängig von der genauen Lage der Grenze 29 zur Heizeinrichtung 13, ist diese vorzugsweise dazu ausgebildet, um das gesamte Flüssigkeitsvolumen im Behälter 3 zum Zweck der Entgasung zu beheizen. Anders als in Figur 1 schematisch gezeigt ist, kann die Heizeinrichtung 13 vorzugsweise im Bereich des unteren Klöpperbodens 3' angeordnet sein, z.B. möglichst nahe am unteren Boden 3* des Behälters 3.

In Figur 1 ist gezeigt, dass der zweiter Endabschnitt 3" des Behälters 3, der entgegen der Lotrichtung LR weist, einen Boden 3** mit einer Austrittsöffnung 14 für Gas und/oder Flüssigkeit aufweist. Der obere Boden 3** ist durch einen oberen Klöpperboden 3" gebildet. Die Austrittsöffnung 14 ist an einem Endpunkt des Behälters 3 entlang der Lotrichtung LR angeordnet, also an einem obersten Punkt des Behälters 3. Die Öffnung 14 weist einen nicht näher gezeigten Anschluss für die Montage eines Überdruckventils 17 bzw. eines Membransicherheitsventils 17 und eines steuerbaren Ventils 15 auf. Das Ventil 15 ist hier ein Motorkugelhahn 15. Über die Austrittsöffnung 14 und den Motorkugelhahn 15 kann austretendes Gas und Ausdehnungswasser während der Aufheizung aus dem Behälter 3 abgeleitet werden. Die Auftrennung findet in einem Entspannungsrohr 16 statt. Das Ausdehnungswasser wird in einen Abfluss 18 geleitet. Das austretende Gas entweicht in einen Betriebsraum.

Der zweite obere Endabschnitt 3" des Behälters 3 weist eine Entnahmeeinrichtung 21 für entgastes Wasser 2 auf. Die Entnahmeeinrichtung 21 weist endseitig eine Entladeleitung 22 auf, wobei ein freies Ende dieser Entladeleitung 22 in Richtung des oberen Bodens 3**, hier des oberen Klöpperbodens 3", weist. Die Entladeleitung 22 hat an ihrem freien Ende einen Ansaugpunkt 22', der in unmittelbarer Nähe zum oberen Boden 3** des zweiten Endabschnitts 3" angeordnet ist. In diesem Beispiel ist der Ansaugpunkt 22' wenige Zentimeter von einer mittleren kugelförmigen Kalotte des oberen Klöpperbodens 3" beabstandet. Der Ansaugpunkt 22' ist koaxial mit der Austrittsöffnung 14 angeordnet und ist somit knapp unterhalb des höchsten Punkts des Behälters 3 positioniert. Der Ansaugpunkt 22' kann auch als Entnahmestelle 22' bezeichnet werden.

In Figur 1 ist weiter gezeigt, dass im Innern des Behälters 3 ein Sensor 23 angeordnet ist. Dieser ist so positioniert, dass zwischen dem Ansaugpunkt 22' und der Messstelle des Temperaturfühlers 23 ein Abstand a ausgebildet ist. Dieser Abstand a kann z.B. 10cm sein. Die Entnahmeeinrichtung 21 ist außerhalb des Behälters 3 mit einer Leitung 24 verbunden, um entgastes Wasser 2 aus dem Behälter 3 zu entnehmen. Das entgaste Wasser 2, das der späteren Ablaufflüssigkeit 2" entspricht, wird mittels der Leitung 24 gemäß der gezeigten Strömungsrichtung (symbolisiert durch Pfeile) im Gegenstrom mit dem Zulaufwasser über den Wärmetauscher 30 geführt. Nach Verlassen des Wärmetauschers 30 wird das entgaste Wasser 2" mittels der Leitung 24 letztlich einem Anschluss 28 für gasfreies Wasser 2" zugeführt. Über den Anschluss 28 kann die Entgasungsvorrichtung 1 mit einem Verbraucher des entgasten Wassers 2" verbunden werden. Beispielsweise kann über den Anschluss 28 entgastes Wasser 2" als Ergänzungswasser für ein Heizungsnetz bereitgestellt werden.

Der Ablauf 20 der Entgasungsvorrichtung 1 umfasst ein Absperrventil 19, das vor allem bei Revisionsarbeiten an außenliegenden Bauteilen zum Einsatz kommen kann, oder um den Ablauf von Wasser 2" aus dem Behälter 3 manuell zu steuern. Der Ablauf 20 enthält weiterhin ein steuerbares Ventil 25, hier einen Motorkugelhahn 25, der stromabwärts des Wärmetauschers 30 angeordnet ist. Der Ablauf 20 enthält weiterhin ein Drosselventil 26 sowie ein Absperrventil 27, die jeweils stromabwärts (bezogen auf die Strömungsrichtung in der Leitung 24) des Motorkugelhahns 25 angeordnet sind. Das Ventil 25 kann optional für eine stetige Regelung ausgebildet sein und in Verbindung mit einem Drucksensor die Funktion Druckhaltung anstelle des Drosselventils 26 übernehmen. Die Entgasungsvorrichtung 1 hat weiterhin eine rein schematisch gezeigte Steuereinrichtung 31, um den Betrieb der Entgasungsvorrichtung 1 zu steuern. Anders als hier gezeigt, ist die Steuereinrichtung 31 in Wirkverbindung mit den betreffenden Elementen der Entgasungsvorrichtung 1, insbesondere den beschriebenen Ventilen und der Heizeinrichtung, um deren Funktion zu steuern zum Zweck der Entgasung von Flüssigkeit 2, 2' im Behälter 3 und für einen Wasserwechsel.

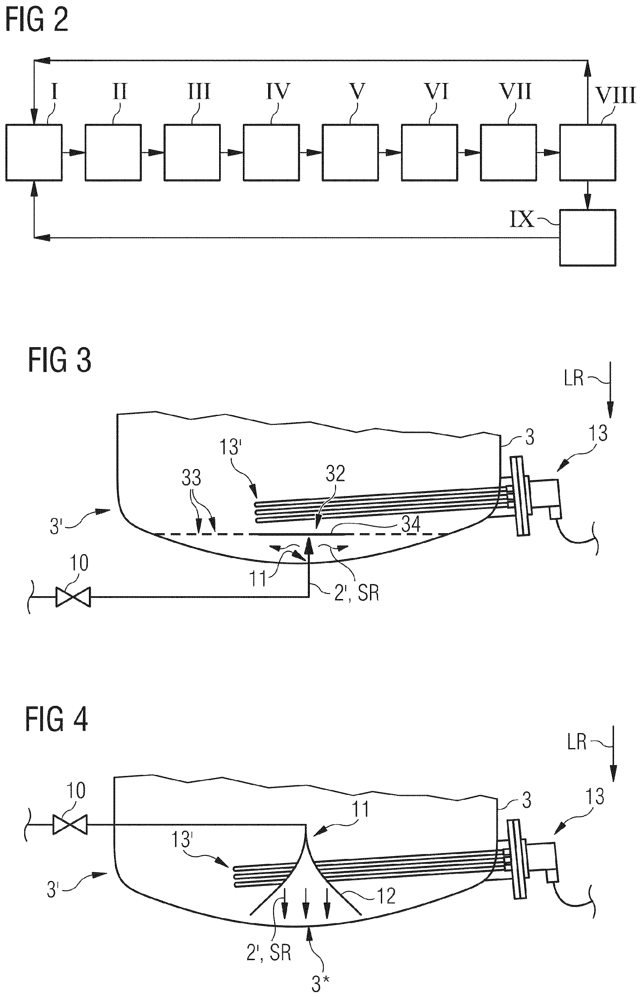

Die Funktionsweise der Entgasungsvorrichtung 1 und ein mögliches Entgasungsverfahren wird anhand von Figur 2 näher beschrieben, wobei bezüglich einzelner Elemente der Entgasungsvorrichtung auf Figur 1 Bezug genommen wird. Figur 2 zeigt ein stark vereinfachtes Ablaufdiagramm eines Entgasungsverfahrens. In Schritt I des Verfahrens sind die Ventile 8 und 25 für den Wasserzulauf und den Wasserablauf geschlossen oder werden geschlossen, falls das zuvor noch nicht erfolgt ist. Das bedeutet, dass der Behälter 3 der Entgasungsvorrichtung 1 bereits mit Flüssigkeit, z.B. Wasser 2, 2' gefüllt ist. Beispielsweise kann eine Sollmenge Wasser 2, 2' im Behälter 3 sein. In Schritt II wird das Ventil 15 geöffnet. In Schritt III wird die Beheizung der Flüssigkeit 2, 2' im Behälter 3 gestartet, wozu die Heizeinrichtung 13 aktiviert wird. Die Beheizung beinhaltet, dass vorzugsweise die gesamte Flüssigkeitsmenge im Behälter 3 auf Siedetemperatur erhitzt wird. Die Aufheizung bis zur Siedetemperatur erfolgt z.B. bei atmosphärischem Druck. Es kann auch vorgesehen sein, dass vor oder während der Aufheizung ein Unterdruck im Behälter 3 erzeugt wird. In Schritt IV wird die Beheizung der Flüssigkeit 2, 2' im Behälter 3 beendet. Die Heizeinrichtung 13 wird in Schritt IV abgeschaltet. Die vorgenannten Schritte I-IV sind an der eigentlichen Entgasung des Wassers 2, 2' im Behälter 3 beteiligt bzw. bewirken die Entgasung.

Schritt IV beinhaltet vorzugsweise, dass die Temperatur des Wassers 2, 2' im Behälter 3, z.B. kontinuierlich, mittels eines Sensors 23 erfasst wird. In Schritt IV kann vorgesehen sein, dass die Beheizung beendet wird, sofern bzw. sobald am Temperaturfühler 23 für eine bestimmte Zeitspanne, z.B. 2 Minuten, kein (messbarer) Temperaturanstieg mehr zu verzeichnen ist. Dann ist gewährleistet, dass das (gesamte) Wasser 2, 2' im Behälter 3 auf Siedetemperatur erhitzt ist. In Schritt IV kann optional eine Nachheizzeit vorgesehen sein, vor dem Abschalten der Heizeinrichtung 13. Um sowohl das Erreichen der Siedetemperatur sicherzustellen, als auch eine gesicherte Abschaltung der Heizeinrichtung 13 zu garantieren, kann wegen einer möglichen Messtoleranz des Sensors 23 je Kelvin, das die gemessene Temperatur der Flüssigkeit 2, 2' unterhalb der Siedetemperatur ist, eine zusätzliche Nachheizzeit von ca. 2 Minuten vorgesehen sein.

Für die Abgabe des entgasten Wassers 2, 2" bzw. für den Wasserwechsel wird in Schritt V das Ventil 15 geschlossen. In Schritt VI werden die Ventile 8 und 25, vorzugsweise gleichzeitig, geöffnet für einen Wasserwechsel. Während des Wasserwechsels wird einerseits entgastes heißes Wasser 2 als Ablaufwasser 2" mittels der Entladeleitung 22 und dem Ablauf 20 aus dem Behälter 3 abgeführt. Das heiße entgaste Wasser 2" wird im Gegenstrom mit dem kalten gashaltigen Wasser 2' im Zulauf 4 über den Plattenwärmetauscher 30 geführt. Dadurch kann erreicht werden, insbesondere durch die Grädigkeit des Wärmetauschers 30, dass Schichtungskräfte, die durch den Temperaturunterschied zwischen Zulaufwasser (gashaltigem Wasser 2') und Behälterwasser (entgastes Wasser 2 im Behälter 3) bedingt sind, eine Vermischung des neu zugeführten gashaltigen Wassers 2' und des im Behälter 3 bereits befindlichen entgasten Wassers 2 verhindern. Gleichzeitig bleibt der Nachheizbedarf durch die Heizeinrichtung 13 vertretbar gering. Die Abgabe des entgasten Wassers 2, 2", z.B. an ein Heizungsnetz, wird über das elektrisch betätigte Ventil 25 gesteuert. Die Wasserabgabe kann durch einen Regler 26 bzw. ein Drosselventil 26 soweit gedrosselt werden, dass im Behälter 3 ein ausreichender Druck erhalten bleibt, der das Entgasen der Flüssigkeit 2, 2' im Behälter während des Wasserwechsels verhindert, z.B. ein Druck von ca. 3-5 bar. Die zuvor beschriebenen Prozesse sind vorzugsweise in Schritt VI des Verfahrens realisiert.

Während des Wasserwechsels in Schritt VI wird andererseits mittels der Zuführeinrichtung 11 kälteres gashaltiges Wasser 2' in den unteren Endabschnitt 3' des Behälters 3 möglichst turbulenzfrei eingebracht. Der Zulauf 4 wird über das elektrisch betätigte Ventil 8 gesteuert. Der Zulaufdruck kann bei Bedarf über einen Druckminderer 7 begrenzt werden. Das in den Behälter 3 einströmende kältere Frischwasser bildet eine eigene Schicht S1 im Behälter 3, die sich nicht oder nicht nennenswert mit der anderen Schicht S2 im Behälter 3 mischt, die bereits entgastes heißes Wasser 2 enthält. Das Verfahren kann z.B. so durchgeführt werden, dass das zulaufende Wasser 2' durch den Wärmetauscher 30 auf ca. 80°C erhitzt und mit dieser Temperatur in den Behälter 3 eingebracht wird. Das Wasser 2' der ersten Schicht S1 kann also etwa 80°C haben. Die andere Schicht S2 enthält Wasser 2, das bereits zuvor entgast wurde, wobei dieses Wasser 2 eine Temperatur von etwa 100°C im Behälter 3 hat. Durch diesen Temperaturunterschied, insbesondere in Kombination mit dem besonderen Wasserzufluss in den Behälter 3, kann eine stabile thermische Schichtung im Behälter 3 erreicht werden. Das Verfahren wird bevorzugt so durchgeführt, dass ein Temperaturunterschied im Wasser 2, 2' der beiden Schichten S1, S1 zwischen 8 Kelvin und 40 Kelvin beträgt, insbesondere zwischen 15 Kelvin und 30 Kelvin.

Während des Wasserwechsels wird das Volumen der gashaltigen Schicht S1 stetig größer, wobei sich das Volumen der gasfreien Schicht S2 aufgrund der Wasserentnahme verkleinert. In der Folge wird eine Grenze 29 bzw. Ebene 29, in der die beiden Schichten S1, S2 aufeinandertreffen, ausgehend vom unteren Endabschnitt 3' entgegen der Lotrichtung LR nach oben verschoben in Richtung R. Mit anderen Worten nähert sich die Schicht S1 mit dem gashaltigen, kälteren Wasser 2' durch den andauernden Zustrom von Frischwasser in den unteren Bereich des Behälters 3 dem Sensor 23 an. Auch die zuvor beschriebenen Prozesse sind vorzugsweise in Schritt VI des Verfahrens realisiert.

In Schritt VII wird der Wasserwechsel beendet. Das kann der Fall sein, wenn ein Bedarf an gasfreiem Wasser 2" bzw. an Nachspeisewassser gedeckt ist. Es kann auch vorgesehen sein, dass der Wasserwechsel beendet wird, sobald das entgaste Wasser 2", d.h. eine maximal vorgesehene Menge, komplett entnommen wurde. Letzteres wird durch einen plötzlichen Temperaturabfall von z.B. 2-5 Kelvin am Temperaturfühler 23 festgestellt. Da der Sensor 23 in Lotrichtung mit einem geringen Abstand unterhalb der Entnahmestelle 22' angebracht ist, wird die Wasserentnahme bzw. der Wasserwechsel rechtzeitig gestoppt, bevor gashaltiges Wasser 2' aus Schicht S1 eingesogen wird. Um den Wasserwechsel zu beenden, können die Ventile 8 und 25, z.B. gleichzeitig, geschlossen werden. Der Behälter 3 ist zu diesem Zeitpunkt für einen nachfolgenden Entgasungszyklus mit Wasser gefüllt.

In Schritt VIII kann entschieden werden, ob direkt ein weiterer Entgasungszyklus durchgeführt wird, wozu ein Wechsel zu Schritt I des Verfahrens erfolgt. Sofern aktuell kein Bedarf an entgastem Wasser besteht, kann die Entgasungsvorrichtung in Schritt IX in einen Standby-Betrieb wechseln. Im Standby-Betrieb kann die Ventilstellung wie in Schritt I, optional wie in Schritt II des Verfahrens sein, wobei die Heizeinrichtung inaktiv ist. Die beschriebenen Schritte I-IX werden vorzugsweise von einer Steuereinrichtung in einem automatisierten Prozess ausgeführt.

In Figur 3 ist schematisch ein Schnitt durch einen Teil einer Entgasungsvorrichtung gemäß der Erfindung gezeigt. Die Entgasungsvorrichtung unterscheidet sich vor allem durch die Zuführeinrichtung von der in Figur 1 gezeigten Entgasungsvorrichtung. Im Übrigen können die Entgasungsvorrichtungen in Figur 1 und 3 gleich aufgebaut sein. In Figur 3 ist die Zuführeinrichtung 11 so realisiert, dass deren freies Ende vom unteren Klöpperboden 3' wegweist. Mittels der Zuführeinrichtung 11 strömt das gashaltige Wasser 2' so in den Behälter 3 ein, dass eine Strömungsrichtung SR (zunächst) vom unteren Klöpperboden 3' wegweist bzw. entgegen der Lotrichtung LR ist. Das gashaltige Wasser 2' trifft auf eine Lochblechscheibe 32 oder Lochscheibe 32, die Teil der Zuführeinrichtung 11 ist. Die Lochblechscheibe 32 liegt einem Wasserzulauf (nicht im Detail gezeigt) bezogen auf die Lotrichtung LR gegenüber. Die Lochblechscheibe 32 hat mehrere Löcher 33 bzw. Durchtrittsöffnungen, wobei eine Lochdichte von (radial) außen nach innen abnimmt (nicht im Detail gezeigt). Eine Mitte 34 der Lochblechscheibe 32, die zentral oberhalb des Wasserzulaufs liegt, ist lochfrei und/oder vollflächig ausgebildet. Durch die Lochblechscheibe 32 wird eine Strömungsberuhigung im gashaltigen Wasser 2' erreicht. Das gashaltige Wasser 2' wird durch die Lochblechscheibe 32 seitlich umgelenkt. Auch durch die Lochblechscheibe 32 können Turbulenzen durch einströmendes Wasser 2' in der Flüssigkeit im Behälter 3 vermieden werden. Die Heizeinrichtung 13 umfasst hier ein oder mehrere Heizelemente 13', z.B. einen oder mehrere Heizstäbe 13', und ist zumindest teilweise im Bereich des unteren Klöpperbodens 3' angeordnet.

In Figur 4 ist schematisch ein Schnitt durch einen Teil einer Entgasungsvorrichtung gemäß der Erfindung gezeigt. Die Entgasungsvorrichtung kann im Übrigen wie in Figur 1 aufgebaut sein. Eine Zuführeinrichtung 11 hat endseitig einen trichterartigen Zulaufquerschnitt, hier einen Erweiterungstrichter 12. Der Erweiterungstrichter 12 ist in Richtung des unteren Klöpperbodens 3' bzw. des unteren Bodens 3* geöffnet. Mittels der Zuführeinrichtung 11 strömt das gashaltige Wasser 2' so in den Behälter 3 ein, dass eine Strömungsrichtung SR gegen den unteren Klöpperboden 3' gerichtet ist. Die Entgasungsvorrichtung umfasst weiterhin eine Heizeinrichtung 13 mit einem oder mehreren Heizelementen 13', z.B. einem oder mehreren Heizstäben 13', wobei das jeweilige Heizelement 13' im Bereich des unteren Klöpperbodens 3' angeordnet ist bzw. anteilig in diesen Bereich eintaucht. Die von der diagonalen und horizontalen abweichende Ausrichtung des Heizelements 13', z.B. der Heizstäbe 13', ermöglicht einen Teil der Wärmeabgabe nahe am unteren Boden 3* des Behälters 3, so dass das gesamte Wasser im Behälter 3 auf Siedetemperatur erhitzt werden kann. Das Heizelement 13', z.B. der oder die Heizstäbe 13', ist auf einer Höhe bezogen auf die Lotrichtung LR mit dem Erweiterungstrichter 12 bzw. mit Teilen davon angeordnet. Bei der Verwendung von mehreren Heizelementen 13', z.B. zwei oder mehr Heizstäbe 13', sind diese vorzugsweise außen um den Erweiterungstrichter 12 herum angeordnet bzw. umschließen den Erweiterungstrichter 12. Dadurch ist das jeweilige Heizelement 13', z.B. der oder die Heizstäbe 13', besonders nahe am unteren Boden 3* des Behälters 3 angeordnet, so dass ebenfalls das gesamte Wasser im Behälter 3 auf Siedetemperatur erhitzt werden kann.

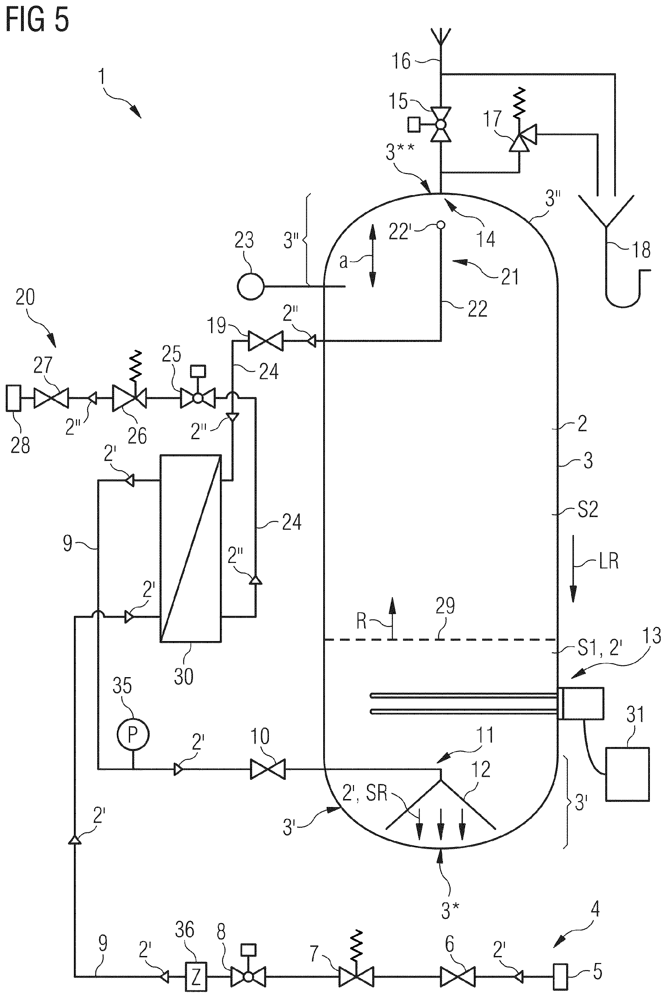

Figur 5 zeigt eine schematische Darstellung einer Entgasungsvorrichtung gemäß der Erfindung, die größtenteils dem Beispiel in Figur 1 entspricht, so dass nachfolgend nur die Unterschiede zwischen den Entgasungsvorrichtungen beschrieben werden. Beim Ausführungsbeispiel in Figur 5 sind das Ventil 15 bzw. das Absperrventil und das Entspannungsrohr 16 vertikal entgegen der Lotrichtung LR angebracht. Als Entspannungsrohr 16 kann vorzugsweise transparentes, temperaturbeständiges Kunststoffrohr verwendet werden. Das Überdruckventil 17 und das Ventil 15, z.B. ein Motorkugelhahn 15, sind mit der Öffnung 14 des Behälters 3 verbunden. Der Zulauf 4 hat hier einen Wasserzähler mit Mengenimpulsausgang 36 und einen Drucksensor 35, der z.B. den Bereich - 1 bis + 8bar erfasst. Das Ventil 8 kann für eine stetige Regelung ausgebildet sein.

Figur 6 zeigt eine schematische Darstellung einer Entgasungsvorrichtung gemäß der Erfindung, die größtenteils dem Beispiel in Figur 5 entspricht, so dass nachfolgend nur die Unterschiede zwischen den Entgasungsvorrichtungen beschrieben werden. Der Zulauf 4 enthält ein Verteilventil für stetige Regelung 37, mittels dem Zulaufwasser zeitweise vollständig oder teilweise am Wärmetauscher 30 vorbeigeleitet werden kann. Der Ablauf 20 hat ein Ventil 25 für Ablaufwasser, das besonders dicht am Behälter 3 angeordnet ist, insbesondere stromaufwärts vom Absperrventil 19.

Es wird abschließend noch einmal darauf hingewiesen, dass es sich bei den vorhergehend detailliert beschriebenen Entgasungsvorrichtungen und dem Verfahren lediglich um Ausführungsbeispiele handelt, welche vom Fachmann in verschiedenster Weise modifiziert werden können, ohne den Bereich der Erfindung zu verlassen. Die beschriebenen Verfahrensschritte müssen daher nicht zwingend in der genannten Reihenfolge ausgeführt werden, wobei auch mehrere Schritte im Wesentlichen gleichzeitig ausgeführt werden können. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Entgasungsvorrichtung
2 entgaste Flüssigkeit / entgastes Wasser
2' Zulaufflüssigkeit / gashaltiges Wasser
2" Ablaufflüssigkeit / entgastes Wasser
3 Behälter / Boiler
3', 3" Endabschnitt Behälter / Klöpperboden
3*, 3** Boden Behälter
4 Zulauf
5 Anschluss
6 Absperrventil
7 Druckminderer
8 Ventil / Motorkugelhahn
9 Leitung
10 Absperrventil
11 Zuführeinrichtung
12 Erweiterungstrichter / trichterartiger Zulaufquerschnitt
13 Heizeinrichtung
13' Heizelement / Heizstab
14 Öffnung / Austrittsöffnung
15 Ventil / Motorkugelhahn
16 Entspannungsrohr
17 Membransicherheitsventil / Überdruckventil
18 Abfluss
19 Absperrventil
20 Ablauf
21 Entnahmeeinrichtung
22 Entladeleitung
22' Ansaugpunkt / Entnahmestelle
23 Sensor / Temperaturfühler
24 Leitung
25 Ventil / Motorkugelhahn
26 Drosselventil / Regler
27 Absperrventil
28 Anschluss
29 Grenze / Ebene
30 Wärmetauscher / Plattenwärmetauscher
31 Steuereinrichtung
32 Lochscheibe / Lochblechscheibe
33 Loch
34 Mitte
35 Drucksensor
36 Wasserzähler mit Mengenimpulsausgang
37 Verteilventil für stetige Regelung
a Abstand
LR Lotrichtung
R Richtung
S1, S2 Schicht
SR Strömungsrichtung
I-IX Verfahrensschritte

## Patentansprüche

1. Entgasungsvorrichtung (1) zur Entgasung von Flüssigkeit (2, 2') umfassend einen Behälter (3), einen Zulauf (4) mit einer Zuführeinrichtung (11) für Zulaufflüssigkeit (2') und einen Ablauf (20) mit einer Entnahmeeinrichtung (21) für entgaste Ablaufflüssigkeit (2"), wobei die Zuführeinrichtung (11) und die Entnahmeeinrichtung (21) in gegenüberliegenden Endabschnitten (3', 3") des Behälters (3) angeordnet sind, und umfassend eine Heizeinrichtung (13) für Flüssigkeit (2, 2') im Behälter (3),
wobei die Entgasungsvorrichtung (1) dazu ausgebildet ist, um die Zulaufflüssigkeit (2') über den Zulauf (4) so in den Behälter (3) einzubringen, dass die Flüssigkeit (2, 2') im Behälter (3) eine Temperaturschichtung aufweist, wobei die Zulaufflüssigkeit (2') eine erste Schicht (S1) und die im Behälter (3) befindliche Flüssigkeit (2) eine unterschiedliche, zweite Schicht (S2) bildet.

2. Entgasungsvorrichtung nach Anspruch 1, wobei die Entgasungsvorrichtung (1) Mittel zur Erzeugung von Unterdruck im Behälter (3) aufweist.

3. Entgasungsvorrichtung nach Anspruch 1 oder 2, wobei die Entgasungsvorrichtung (1) zur Entgasung von Speisewasser oder Frischwasser ausgebildet ist, insbesondere für Ergänzungswasser oder Zusatzwasser für Heizanlagen.

4. Entgasungsvorrichtung nach einem der vorstehenden Ansprüche mit einem Wärmetauscher (30), über den der Zulauf (4) und der Ablauf (20) geführt werden außerhalb des Behälters (3).

5. Entgasungsvorrichtung nach Anspruch 4, wobei der Wärmetauscher (30) ein Plattenwärmetauscher (30) ist, und/oder wobei der Zulauf (4) und der Ablauf (20) im Gegenstrom über den Wärmetauscher (30) geführt werden.

6. Entgasungsvorrichtung nach Anspruch 4 oder 5, wobei eine Grädigkeit des Wärmetauschers (30) so bestimmt ist, dass mittels Schichtungskräften infolge eines Temperaturunterschieds zwischen Zulaufflüssigkeit (2') und Flüssigkeit (2) im Behälter (3) eine stabile Schichtung aus zwei Schichten (S1, S2) im Behälter (3) erzeugt wird, wobei vorzugsweise im Behälter (3) eine Temperatur der erwärmten Zulaufflüssigkeit (2') zumindest 8 Kelvin und/oder höchstens 40 Kelvin geringer ist, als eine Temperatur der Flüssigkeit (2) im Behälter (3).

7. Entgasungsvorrichtung nach einem der vorstehenden Ansprüche, wobei ein erster Endabschnitt (3') des Behälters (3), der in Lotrichtung (LR) weist, die Zuführeinrichtung (11) für Zulaufflüssigkeit (2') aufweist, wobei die Zuführeinrichtung (11) einen trichterartigen Zulaufquerschnitt (12) hat, und/oder wobei Zuführeinrichtung (11) eine oder mehrere Düsen für Zulaufflüssigkeit (2') hat.

8. Entgasungsvorrichtung nach einem der vorstehenden Ansprüche, wobei die Zuführeinrichtung (11) mit einem freien Ende in Richtung eines Bodens (3*) des ersten Endabschnitts (3') weist, und/oder wobei die Zuführeinrichtung (11) dazu ausgebildet ist, um die Zulaufflüssigkeit (2') mit einer Strömungsrichtung (SR) in den Behälter (3) einzubringen, die in Richtung eines Bodens (3*) des ersten Endabschnitts (3') weist.

9. Entgasungsvorrichtung nach einem der vorstehenden Ansprüche, wobei die Zuführeinrichtung (11) mit einem freien Ende von einem Boden (3*) des ersten Endabschnitts (3') weg weist und/oder wobei die Zuführeinrichtung (11) dazu ausgebildet ist, um die Zulaufflüssigkeit (2') mit einer Strömungsrichtung (SR) in den Behälter (3) einzubringen, die von einem Boden (3*) des ersten Endabschnitts (3') weg weist und/oder wobei der Behälter (3) Mittel (32) zur Strömungsberuhigung beinhaltet, vorzugsweise eine Lochscheibe (32) mit einer zu einer Mitte (34) der Lochscheibe (32) hin abnehmenden Lochdichte.

10. Entgasungsvorrichtung nach einem der vorstehenden Ansprüche, wobei ein zweiter Endabschnitt (3") des Behälters (3), der entgegen der Lotrichtung (LR) weist, einen Boden (3**) mit einer Austrittsöffnung (14) für Gas und/oder Flüssigkeit aufweist an einem Endpunkt des Behälters (3) entlang der Lotrichtung (LR),
oder, wobei ein zweiter Endabschnitt (3") des Behälters (3), der entgegen der Lotrichtung (LR) weist, einen Boden (3**) mit einer Austrittsöffnung (14) für Gas und/oder Flüssigkeit aufweist an einem Endpunkt des Behälters (3) entlang der Lotrichtung (LR), wobei die Austrittsöffnung (14) ein Überdruckventil (17) und/oder ein steuerbares Ventil (15) aufweist zur Ableitung von austretendem Gas und/oder Flüssigkeit aus dem Behälter (3).

11. Entgasungsvorrichtung nach einem der vorstehenden Ansprüche, wobei der zweite Endabschnitt (3") die Entnahmeeinrichtung (21) aufweist, wobei die Entnahmeeinrichtung (21) eine Entladeleitung (22) mit einem freien Ende hat, das in Richtung eines Bodens (3**) des zweiten Endabschnitts (3") weist, und/oder wobei ein Ansaugpunkt (22') der Entnahmeeinrichtung (21) in unmittelbarer Nähe zu einem Boden (3**) des zweiten Endabschnitts (3") angeordnet ist.

12. Entgasungsvorrichtung nach einem der vorstehenden Ansprüche, wobei die Entgasungsvorrichtung (1) zumindest eines der folgenden Elemente aufweist:
- zumindest ein steuerbares Ventil (8) des Zulaufs (4),
- zumindest einen Druckminderer (7) des Zulaufs (4),
- zumindest ein steuerbares Ventil (25) des Ablaufs (20),
- zumindest einen Regler (26) des Ablaufs (20), wobei mittels des Reglers (26) ein Druck im Behälter (3) bei einem Flüssigkeitswechsel gehalten wird, insbesondere ein Überdruck, so dass Ausgasen verhindert wird.

13. Verfahren zur Entgasung von Flüssigkeit (2, 2') mittels einer Entgasungsvorrichtung (1), insbesondere nach einem der vorstehenden Ansprüche, die einen Behälter (3), einen Zulauf (4) mit einer Zuführeinrichtung (11) für Zulaufflüssigkeit (2') und einen Ablauf (20) mit einer Entnahmeeinrichtung (21) für entgaste Ablaufflüssigkeit (2"), wobei die Zuführeinrichtung (11) und die Entnahmeeinrichtung (21) in gegenüberliegenden Endabschnitten (3', 3") des Behälters (3) angeordnet sind, und eine Heizeinrichtung (13) für Flüssigkeit (2, 2') im Behälter (3) umfasst,
wobei die Zulaufflüssigkeit (2') über den Zulauf (4) so in den Behälter (3) eingebracht wird, dass die Flüssigkeit (2, 2') im Behälter (3) eine Temperaturschichtung aufweist, wobei die Zulaufflüssigkeit (2') eine erste Schicht (S1) und die im Behälter (3) befindliche Flüssigkeit (2) eine unterschiedliche, zweite Schicht (S2) bildet.

14. Verfahren nach Anspruch 13, wobei zur Entgasung die Flüssigkeit (2, 2') im Behälter (3) beheizt wird, insbesondere auf Siedetemperatur, wobei die Beheizung beendet wird, wenn an einem Temperaturfühler (23) im Bereich der Entnahmeeinrichtung (21) für eine definierte Zeitspanne kein Temperaturanstieg erfasst wird, wobei optional eine Nachheizzeit vorgesehen ist, deren Dauer in Abhängigkeit einer Temperaturdifferenz zur Siedetemperatur bestimmt wird, und/oder wobei zur Entgasung der Zulauf (4) und der Ablauf (20) geschlossen sind,
und/oder wobei zur Entgasung austretendes Gas und/oder Flüssigkeit aus dem Behälter (3) abgeleitet werden.

15. Verfahren nach Anspruch 13 oder 14, wobei für einen Flüssigkeitswechsel der Zulauf (4) geöffnet wird und die Entnahme von entgaster Flüssigkeit (2, 2") so gesteuert wird, dass ein Druck im Behälter (3) gehalten wird, um ein Ausgasen zu verhindern,
und/oder wobei der Flüssigkeitswechsel beendet wird, wenn eine Höchstmenge an entgaster Flüssigkeit (2, 2") aus dem Behälter (3) entnommen wurde, wobei als Abbruchkriterium ein sprunghafter Temperaturabfall an einem Temperaturfühler (23) im Bereich der Entnahmeeinrichtung (21) genutzt wird.
